# EUROPÄISCHE PATENTSCHRIFT

(11) **EP 3 440 422 B1**
(45) Veröffentlichungstag und Bekanntmachung des Hinweises auf die Patenterteilung: **02.07.2025**
(21) Anmeldenummer: 17717130.3
(22) Anmeldetag: 07.04.2017
(51) Int. Cl.: F28D 20/00

(54) **ELEKTRISCH BEHEIZBARER LATENTWÄRMESPEICHER MIT KURZEN BELADEZEITEN**
ELECTRICALLY HEATABLE LATENT HEAT STORAGE DEVICE WITH SHORT CHARGING TIMES
ACCUMULATEUR DE CHALEUR LATENTE À CHAUFFAGE ÉLECTRIQUE ET COURTS TEMPS DE CHARGEMENT

(30) Priorität: 08.04.2016 DE 102016004248
(43) Veröffentlichungstag der Anmeldung: 13.02.2019
(73) Patentinhaber: Fraunhofer-Gesellschaft zur Förderung der angewandten Forschung e.V., 80686 München (DE)
(72) Erfinder: KUITUNEN, Stefan, 01157 Dresden (DE); KLAUSNER, Sven, 01099 Dresden (DE)
(74) Vertreter: Pfenning, Meinig & Partner mbB
(86) Internationale Anmeldenummer: PCT/EP2017/058447
(87) Internationale Veröffentlichungsnummer: WO 2017/174803

(56) Entgegenhaltungen:
- WO-A1-2011/072988
- WO-A1-2011/072988
- WO-A2-2012/167934
- WO-A2-2012/167934
- US-B1- 6 400 896
- US-B1- 6 400 896

## Beschreibung

Die Erfindung betrifft einen Latentwärmespeicher der in kurzer Zeit mit elektrisch erzeugter Wärmeenergie beladen werden kann sowie dessen Verwendung zur Beheizung von elektrisch angetriebenen Fahrzeugen und jeweils ein Betriebsverfahren hierfür.

Die Ausgestaltung des erfindungsgemäßen Latentwärmespeichers erfolgt nach den Merkmalen des Anspruchs 1. Merkmale vorteilhafter Weiterbildungen sind Gegenstand von Unteransprüchen. Das Dokument WO2011/072988 zeigt ein Fahrzeug mit einem elektrisch beheizbaren Latentwärmespeicher, gemäß dem Oberbegriff des Anspruchs 1.

In den beigefügten Figuren zeigen:
Fig. 1 einen Latentwärmespeicher in einem Personenbus gemäß einer Ausführungsform der Erfindung;
Fig. 2 einen prinzipiellen Aufbau einer Wärmepumpe;
Fig. 3 einen Zusammenhang zwischen Wärmespeicherkapazität und Arbeitstemperatur ausgewählter Phasenwechselmaterialien;
Fig. 4 einen graphischen Zusammenhang zwischen Wärmebedarf, Entladeleistung und Speicherkapazität;
Fig. 5 eine schematische Darstellung von Wärmespeicherkonzepten gemäß einer Ausführungsform der Erfindung;
Fig. 6 verschiedene Speichermodulkonzepte gemäß einer Ausführungsform Ausführungsformen der Erfindung;
Fig. 7 zwei Schnitte von Gestaltungsvarianten eines Latentwärmespeichers gemäß einer Ausführungsform der Erfindung;
Fig. 8 eine weitere Ausführungsform eines Latentwärmespeichers gemäß einer Ausführungsform der Erfindung;
Fig. 9 Schnitte A, B und C aus der Fig. 8;
Fig. 10 Gestaltungsvarianten von Wärmeleitstrukturen für einen Latentwärmespeicher gemäß einer Ausführungsform der Erfindung;
Fig. 11 einen Schnitt eines Heizelements mit einer in z-Richtung variierenden Heizleistung eines Latentwärmespeichers gemäß einer Ausführungsform der Erfindung; und
Fig. 12 einen Schnitt eines Heizelements mit einer in x-Richtung variierenden Heizleistung eines Latentwärmespeichers gemäß einer Ausführungsform der Erfindung.

Eine der großen Herausforderungen der kommenden Jahre für den städtischen Personennahverkehr ist es, ohne klimaschädliche Emissionen auszukommen. Das Vorantreiben der Entwicklung von konventionellen über hybride bis hin zu vollelektrischen Stadtbussen stellt diesbezüglich einen wichtigen Schritt dar, um diesem Ziel näher zu kommen.

Im Vergleich mit konventionellen Energieträgern (z. B. Diesel) verfügen die Speicher vollelektrischer Fahrzeuge aufgrund der viel geringeren Energiedichte über deutlich limitierte Energieressourcen. Wird die Energie, die in den elektrischen Speichern von Elektrobussen nur begrenzt vorhanden ist, neben der Traktion auch für den Betrieb von Nebenaggregaten, wie z.B. der Heizung des Fahrgastraumes, eingesetzt, reduziert sich die Reichweite dieser Fahrzeuge erheblich.

Ein Kernproblem stellt hier also besonders die Beheizung des Fahrgastraumes dar, da diese eine relativ hohe Leistung benötigt.

Über den spezifischen, auf die Fahrleistung bezogenen Heizenergiebedarf von Stadtlinienbussen ist im Stand der Technik bekannt, dass mit abfallender Außentemperatur ein ansteigender und bei Außentemperaturen von etwa -10°C ein auf dem Niveau des spezifischen Traktionsenergiebedarfs des Fahrzeuges liegender Heizenergiebedarf zu erwarten ist.

Will man neben der Realisierung der Antriebsaufgabe des voll-elektrisch angetriebenen Fahrzeuges zugleich ein elektrisches Heizsystem für die Beheizung des Fahrgastinnenraums aus einem elektrischen Energiespeicher versorgen, muss dieser zumindest die doppelte Speicherkapazität aufweisen verglichen mit dem Fall, dass der Energiespeicher lediglich für die Energiebereitstellung zur Fortbewegung des Fahrzeuges und für notwendige Hilfsprozesse mit geringem Energiebedarf eingesetzt wird.

Folgende anwendungsspezifische Systemanforderungen und technische Randbedingungen sprechen gegen eine Versorgung elektrischer Heizsysteme für die Fahrgastinnenraumheizung von elektrisch angetriebenen Fahrzeugen und insbesondere von Stadtlinienbussen aus in diesen Fahrzeugen integrierten Traktionsenergiespeichern:
- verfügbare Bauraum- und Gewichtsreserven von Fahrzeugen bzw. Stadtlinienbussen zur Integration elektrischer Energiespeichertechnologie
- Reichweitenreduzierung
- Kostensituation für elektrische Energiespeichersysteme
- Absenkung des Systemwirkungsgrades durch Zwischenspeicherung elektrischer Energie (Ein- und Ausspeichervorgang) vor der Umwandlung in thermische Energie

Der erfindungsgemäßen Lösung liegt die Aufgabe zugrunde, die vollständige Beizung eines elektrisch angetriebenen Fahrzeugs, insbesondere des Fahrgastinnenraums eines vollelektrischen Stadtlinienbusses auch bei tiefen Außentemperaturen zu ermöglichen, ohne für diesen Zweck Energie aus dem Traktionsenergiespeicher entnehmen zu müssen.

### Stand der Technik - Heizungssysteme für Stadtbusse

Heizungssysteme für Stadtbusse waren seit Jahrzehnten darauf ausgerichtet, die ausreichend zur Verfügung stehende Motorabwärme des Dieselmotors in den Fahrgastraum zu transportieren. Diese konventionellen Heizungssysteme beinhalten in der Regel ein Brennstoffzusatzheizgerät zum Vorwärmen des Motors und zum schnellen Erreichen einer angenehmen Fahrgastraumtemperatur. Die zunehmende Ausrichtung auf vollelektrische und damit emissionsfreie Stadtbusse steigert die Anforderungen an die Effizienz der Heizungssysteme erheblich.

Aktuell existieren am Markt elektrische und damit potentiell emissionsfreie Heizungssysteme, die sich in die zwei grundlegenden Kategorien Wärmepumpensysteme und PTC-Heizer einteilen lassen.

Darüber hinaus sind prinzipiell noch weitere alternative Beheizungskonzepte für Stadtbusse denkbar, die bereits für andere Anwendungen verfügbar sind. Zu diesen zählen unter anderen Flächen- und Infrarotheizungssysteme.

### Konventionelle Lösungen

Kommerziell sind verschiedene Brennstoffheizer von diversen Herstellern am Markt verfügbar. Nach dem zu beheizenden Medium wird zwischen Luft- und Wasserheizer unterschieden, die in verschiedenen Leistungsklassen (Luft: 0,8 - 8,0 kW; Wasser: 1,5 - 40 kW) erhältlich sind. Während Wasserheizer dabei stets in den Kühl-/Heizungswasserkreislauf integriert und über Wärmetauscher an den Innenraum gekoppelt sind, beheizen die Luftheizer lokal und direkt den Fahrgastraum. Ein Vorteil des Luftheizers ist dabei seine kurze Anlaufzeit. Allerdings bedarf es, um beispielsweise die gesamte Wärmeanforderung eines Busses abzudecken und die entsprechende Verteilung der Wärme zu gewährleisten, mehrerer Luftheizer in einem Fahrzeug.

Allgemein ist der Vorteil einer Brennstoffheizung im Zusammenhang mit vollelektrischen Bussen, dass der Batterie keine Energie entnommen werden muss. Damit ist die Fahrzeugreichweite vom Einfluss der Heizanforderung entkoppelt. Allerdings widerspricht dieser Ansatz dem Grundprinzip der Elektromobilität mit dem Anspruch auf lokale und globale Emissionsfreiheit und stellt in Verbindung mit umweltschonenden Kraftstoffen wie beispielsweise Biodiesel im besten Fall eine Übergangslösung dar.

### Emissionsfreie Lösungen

### Wärmepumpen

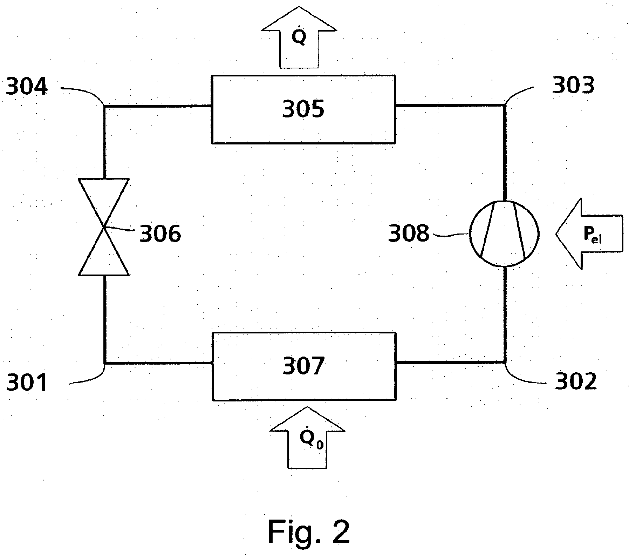

Eine Wärmepumpe ermöglicht die Anhebung des Temperaturniveaus eines Wärmestromes *Q*0 einer Wärmequelle unter Zuführung elektrischer Leistung ***P***el. In Fig. 2 ist der prinzipielle Aufbau einer Wärmepumpe dargestellt, nämlich den Kreisprozess einer Kompressions-Wärmepumpe. In der Fig. 2 ist
Q nutzbare Wärme auf hohem Temperaturniveau;
*Q*0 Wärme zur Verdampfung des Arbeitsmediums auf niedrigem Temperaturniveau; und
***^{P}***el elektrische Leistung.

Die dem Verdampfer zugeführte Niedertemperaturwärme Q0 führt zur Verdampfung des Kältemittels (301→302) bevor es vom Verdichter angesaugt und auf einen höheren Druck verdichtet wird (302→303). Die Abkühlung und Verflüssigung des Kältemittels am Kondensator (303→304) führt zur Abgabe des nutzbaren Wärmestroms *Q* auf einem hohen Temperaturniveau. Anschließend schließt sich der Kreisprozess über die am Drosselventil (304→301) erfolgende Druckabsenkung des Kältemittels, das dann im Anschluss wieder auf einem geringen Temperaturniveau verdampft werden kann. Der Wirkungsgrad einer Wärmepumpe wird durch den COP (coefficient of performance) charakterisiert und ergibt sich aus dem Verhältnis von nutzbarer Wärmemenge zu elektrischer Arbeit.

Insbesondere für den Stadteinsatz geeignete Wärmepumpensysteme, in der Regel handelt es sich hierbei um Luft/Luft-Systeme, Entziehen der Umgebungsluft Wärme und Führen diese dem Fahrgastraum auf dem gewünschten Temperaturniveau zu. Die benötigte Antriebsenergie zum Betrieb des Kompressors und der Ventilatoren liefert bei vollelektrischen Bussen dabei die Traktionsbatterie (mit der Konsequenz einer Reichenweitenreduktion). Ab Außentemperaturen unterhalb von -5 °C können sie, aufgrund reduzierter Leistungsfähigkeit (Vereisung des Verdampfers) und Effizienz den Heizbedarf eines Stadtbusses nicht mehr vollständig abdecken. Folglich ist ein Zusatzheizer erforderlich, der üblicherweise als Brennstoffheizer ausgeführt ist.

### Elektrische Widerstandsheizungen (PTC-Heizer)

PTC-Heizer sind elektrische Heizgeräte, die elektrische Energie über einen Widerstand (Kaltleiter) in thermische Energie umwandeln. Sie sind ebenso wie die Brennstoffheizgeräte in Luft- und Wasserheizgeräte zu unterscheiden. Hierbei wird von aktuell kommerziell erhältlichen Geräten ein Leistungsspektrum von bis zu 20 kW bei einer Anschlussspannung bis 600 V mit einem Wirkungsgrad von bis ca. 98 % abgedeckt.

Im vollelektrischen Stadtbus liefert die Traktionsbatterie den elektrischen Strom zum Betrieb des PTC-Heizers, der ihn in Wärme umwandelt. Diese wird je nach Heizgerät entweder direkt an die Luft im Fahrgastinnenraum oder aber an einen konventionellen Heizungskreislauf abgegeben. Im letzten Fall gelangt die Wärme letztlich über Konvektoren in den Innenraum. Da die entsprechende Verrohrung vorwiegend unter dem Fahrzeugboden verlegt wird, treten bei elektrischen Wasserheizungen erhebliche Wärmeverluste an die Umgebung auf, wie Messergebnisse einer Heizleistungsbilanzierung an einem Stadtbus bestätigen.

Zwischen der Bereitstellung der elektrischen Energie am Ladepunkt und deren Nutzung im Heizungssystem eines elektrisch angetriebenen, batteriegespeisten Fahrzeugs muss die Energie bisher in der Traktionsbatterie zwischengespeichert werden. Die daraus resultierenden Energieverluste erreichen in Abhängigkeit der Energiespeicherkapazität, der eingesetzten Speichertechnologie und den notwendigen Ladeströmen eine Größenordnung von bis zu 10 %. Diesem der Systemeffizienz abträglichen Umstand unterliegen alle bisher am Markt verfügbaren elektrischen Heizungssysteme.

### Alternative Lösungen

### Infrarot-Heizelemente

Neben Konvektionswärme, die von Heizgeräten an die Umgebungs-luft abgegeben, über diese transportiert und dann an die Fahrgäste weitergegeben wird, besteht die Möglichkeit, Körper auch über Strahlungswärme (Infrarot-/ IR-Strahlung) zu erwärmen. Diese Strahlung wird anhand ihrer Wellenlänge in drei Bereiche eingeteilt: IR-A-Strahlung (0,78 - 1,4 µm), IR-B-Strahlung (1,4 - 3 µm) und IR-C-Strahlung (3-1.000 µm). Diese ist im Gegensatz zu anderen Strahlungsarten ungefährlich für die menschliche Gesundheit. Heiße Körper geben Ihre Energie zu einem bestimmten Anteil in Form von IR-Strahlung ab. Trifft diese Strahlung auf einen Körper, wird sie teilweise adsorbiert und deren Energie in Wärme umgewandelt. Dadurch wird dieser Körper, z. B. ein menschlicher Körper, erwärmt. Ein wichtiger Unterschied zur konvektiven Wärmeverteilung ist, dass die Ausbreitung der Wärmestrahlung rein über elektromagnetische Wellen erfolgt. Eine Erwärmung der umgebenden Luft ist nicht notwendig, so dass ein Körper trotz kühler Umgebungsluft erwärmt werden kann.

Technische Geräte zur Abgabe von IR-Strahlung (IR-Strahler) werden eingeteilt in Niedertemperaturstrahler mit einer Oberflächentemperatur von maximal 120 °C und Hochtemperaturstrahler. Letztere sind auf Grund der akuten Verbrennungsgefahr nicht für den Einsatz in Bereichen geeignet, die von Menschen erreicht werden können. Ihr Haupteinsatzgebiet sind Hallenheizungen, wo diese in mehreren Metern Höhe angebracht werden, so dass eine Berührung durch Menschen ausgeschlossen werden kann.

Im Gegensatz dazu können Niedertemperaturstrahler trotz ihrer hohen Oberflächentemperaturen auch an Stellen eingesetzt werden, die für Menschen zugänglich sind. Dies liegt daran, dass durch die verwendeten, gut isolierenden Oberflächen und die ausschließliche Verwendung von "trockener Hitze" ein Verbrennen auch bei Temperaturen um 100 °C ausgeschlossen werden kann.

Niedertemperaturstrahler senden ausschließlich langwellige IR-C-Strahlung aus. Zur Beheizung von Niedertemperaturstrahlern wird heute neben Gas vor allem elektrische Energie eingesetzt. Der Wirkungsgrad der Umwandlung wird dabei berechnet als das Verhältnis der Energiemenge, die als Wärmestrahlung vom Gerät abgegeben wird, zur eingesetzten - z. B. elektrischen - Energie. Die übrige Energie wird meist in Form von Konvektions-wärme an die Umgebung abgegeben. Der Strahlungsanteil eines IR-Strahlers steigt dabei mit seiner Temperatur an. Daher verfügen Hochtemperaturstrahler je nach Bauform über sehr hohe Wirkungsgrade von rund 90 %. Niedertemperaturstrahler dagegen erzeugen die IR-Strahlung mit Wirkungsgraden von maximal 60 - 70 %.

### Flächenheizungen

Eine Form der Niedertemperaturstrahler sind Flächenheizungen. Unterschieden wird dabei zwischen elektrischen und Warmwasserflächenheizungen. Je nach Ausführung können spezifische Wärme-leistungsdichten von bis zu 350 W/m² erreicht werden. Die Integration beispielsweise in eine Busstruktur kann im Fußbodenbereich oder in den Seitenwänden erfolgen. Die entsprechende Gesamtoberfläche für einen 18 m Bus beträgt ca. 128 m². Unter praktischen Gesichtspunkten ist jedoch nur ein Bruchteil dieser Fläche für Heizelemente nutzbar. Besonders interessant scheint die Nutzung einer Wärmepumpe in Verbindung mit einer Warmwasserflächenheizung. Der Vorteil hierbei ist die Kombination des geringen Energiebedarfs der Wärmepumpe mit der Möglichkeit, bei geringeren Innenraumtemperaturen aufgrund der Niedertemperaturstrahlungswärme eine vergleichbare thermische Behaglichkeit zu erreichen wie bei konventionellen Heizungssystemen. Bei einer einzubringenden Wärmeleistung von 20 kW und einer maximalen spezifischen Wärmeleistungsdichte der Flächenheizung von 350 W/m² ergibt sich daraus eine benötigte Fläche von 57 m².

Sitzheizungen dienen der direkten Erwärmung der Sitzfläche und Rückenlehne von z. B. Fahrzeugsitzen. Sie bestehen meist aus Heizmatten, die wahlweise in die Polster oder den Sitzbezug eingearbeitet oder dazwischen eingeklebt werden. In diese Matten sind Drähte eingearbeitet, die sich bei elektrischer Bestromung erhitzen. Die entstehende Wärme wird über den Sitz direkt an die darauf sitzende Person abgegeben. Eine konvektive Wärmeverteilung über die Luft ist somit nicht notwendig. Allerdings gelangt ein großer Teil der Wärmeenergie in den Sitz und steht somit nicht mehr direkt zur Erwärmung des Fahrgastes zur Verfügung. Allerdings ist es möglich, durch eine intensive Isolierung eine gezielte Leitung der Wärmeenergie in Richtung Fahrgast zu erreichen.

Über eingebaute Sensorik und Steuereinheiten wird die Sitzheizung geregelt. So kann zum einen die Energieabgabe bedarfsgerecht eingestellt werden. Zum anderen wird über die Sensorik die Reaktion der Heizmatte überprüft, so dass eine Gesundheitsgefährdung durch Verbrennung an zu heißen Sitzen oder elektrische Kurzschlüsse an gebrochenen Heizleitern heute ausgeschlossen werden können.

Beispielsweise in Bussen sind Sitzheizungen für die Klimatisierung des Fahrerarbeitsplatzes heute schon weit verbreitet. Auch im PKW-Bereich stellt diese Technik bereits den Standard dar. Eine Beheizung von Fahrgastsitzen für Busse über Heizmatten ist allerdings derzeit nicht üblich.

Je nach Anforderungen werden Sitzheizungen in der Regel mit einer Heizleistung von 40 - 100 W je Sitz ausgestattet. Allerdings sind derzeit keine Zahlen über einen möglichen Energieverbrauch von Sitzheizungen für Fahrgastsitze bekannt. Modellbasierte Berechnungen des Energieverbrauchs von Elektro-PKWs gehen davon aus, dass eine Sitzheizung in rund 10 % der Fahrzeit zum Einsatz kommt. Die Übertragbarkeit dieser Information auf Busse ist allerdings nicht zwangsläufig eins zu eins möglich.

### Latentwärmespeicher

Latentwärmespeicher beziehungsweise Speicher und Speichersysteme unter Verwendung von Phase Change Materials (PCM) speichern einen Großteil der Wärme in Form der für einen Phasenübergang des zum Einsatzkommenden Speichermaterials benötigten Energie. Vorteile gegenüber Wasser sind dabei höhere spezifische Speicherdichten und die Möglichkeit, eine vergleichbare Wärmemenge in einem engeren, dem Anwendungsfall angepasstem Temperaturband zu speichern. Dadurch werden Wärmeverluste an die Umgebung reduziert. Kommerzielle Latentwärme- Speichersysteme für Busse sind aktuell nicht verfügbar. Latentwärmespeicher sind z.B. aus den Druckschriften DE 10 2012 002 952 A1, DE 10 2009058 842 A1, DE 10 2006043 525 A1, EP 0 424 700 A1 und DE 10 2006 037 760 A1 bekannt.

### Materialien

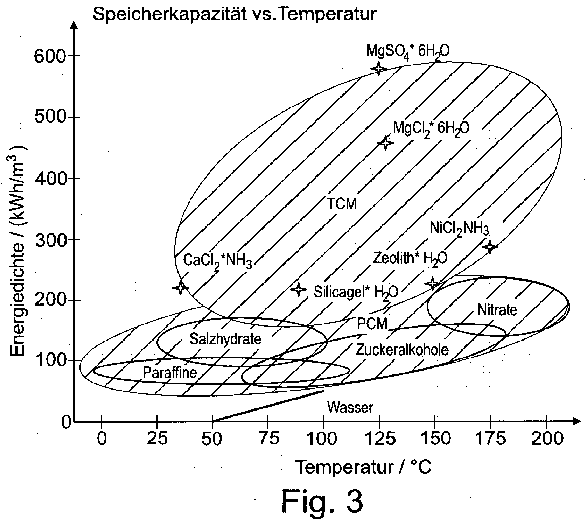

Für den Einsatz von PCM in Heizsystemen für Elektrobusse eignen sich nach Fig. 3 vor allem Paraffine und Salzhydrate. Fig. 3 zeigt eine Übersicht über die spezifischen Wärmespeicherkapazitäten verschiedener Materialien und Speichertypen im Zusammenhang mit den jeweils relevanten Temperaturbereichen. Eine Übersicht über die Eigenschaften der beiden Stoffklassen bietet Tabelle 1. PCM weisen im Allgemeinen eine gute Wärmekapazität, jedoch eine schlechte Wärmeleitfähigkeit auf. Die Wärmeleitfähigkeit lässt sich bis um den Faktor 100 steigern, indem beispielsweise Graphit und PCM in einer Matrix zu einem Hybridspeichermaterial verbunden werden.

**Tabelle 1: Eigenschaften geeigneter PCM-Materialien**

| | **Paraffine** | **Salzhydrate** |
|---|---|---|
| T_{Anwendung} in °C | 0 - 400 | 0 - 140 |
| T_{Schmelz} in °C | 2 - 164 | 7 - 117 |
| h_{Schmelz} in kJ/kg | 40 - 340 | 100 - 210 |
| cₚ in kJ/(kg*K) | 2,0 - 2,9 | 1,6 - 2,6 |
| Vorteile | reaktionsträge, nicht toxisch, nicht korrosiv, separieren nicht, zyklusstabil | Kosten, hohe Dichte, nicht brennbar |
| Nachteile | große Volumenänderung (10 %) bei Phasenübergang fest → flüssig, brennbar, Kosten, schlechter Wärmeübergang | separieren beim Schmelzvorgang (techn. Lösungen vorh.), schlechter Wärmeübergang, korrosiv |

### Prototypische Latentwärmespeicher

Im Rahmen einer Studie wurden verschiedene PCM-Speicher-Prototypen für den Nutzfahrzeugbereich gebaut und im Hinblick auf ihre Entladeleistungen untersucht. Das untersuchte Konzept setzte stets konventionelle mit einem Verbrennungsmotor betriebene Fahrzeuge und eine dadurch zur Verfügung stehende Abwärme voraus. Die Prototypen wurden insbesondere nicht auf den Anwendungsfall: "Beheizung eines Businnenraumes" ausgelegt. Die Speicherkapazitäten der Prototypen liegen zwischen 0,14 und 8,33 kWh. Beladedauer und -leistungen wurden nicht untersucht. Die Entladedauern und - leistungen fallen für die Innenraumheizung zu gering aus. Eine Ausnahme bildet ein Speichertyp, der speziell für eine hohe Entladeleistung ent-wickelt wurde und Entladeleistungen von bis zu 15 kW ermöglicht. Mit einer sehr geringen Speicherkapazität von 0,14 kWh ist er allerdings bereits nach 100 Sekunden nahezu vollständig entladen. Grundsätzlich belegt die Studie jedoch die Umsetzbarkeit eines auf Latentwärmespeichern basierenden Beheizungskonzeptes für den Einsatz in vollelektrischen Bussen.

### Kommerzielle Latentwärmespeicher

Im stationären Bereich findet PCM bereits vermehrt Verwendung. Dabei wird zwischen passiven und aktiven Systemen unterschieden. Passive Systeme wie z. B. PCM in Gipskartonplatten als Wandverkleidung in Gebäuden dienen dazu, den Energiebedarf für die Raumklimatisierung zu reduzieren, indem die thermisch aktive Speichermasse der Wände erhöht wird. Im Zusammenhang mit der Nutzung als alleiniges Heizungssystem für den mobilen Einsatz sind lediglich aktive Systeme interessant, da diese gezielt d. h. unter Verwendung einer Steuerung bzw. Regelung unter be- und entladen werden können. Entsprechende Speichersysteme sind bereits als modulare Speicher am Markt unter Verwendung von Phasenwechselmaterialien mit verschieden hohen Schmelzpunkten und einer nutzbaren Wärmemenge von 10 - 12 kWh verfügbar. Die Be- bzw. Entladung dieser Speicher erfolgt dabei stets über ein Wärmeträgerfluid.

### Gelegenheitsladung - insbesondere für Elektrobusse

Überall dort, wo die für den regelmäßigen Innenstadt- und Pendlerverkehr benötigten Transportkapazitäten das mit modernen Linienbussen realisierbare Maß nicht überschreiten, werden diese auch weiterhin das Rückgrat kommunaler Verkehrs-betriebe bilden. Gerade innerstädtische Verkehrsflächen und suburbane Randgebiete sind infolge der weiter voranschreitenden Urbanisierung unserer Ballungsgebiete einer zunehmenden Umweltbelastung durch die damit verbundene anwachsende Verkehrsdichte ausgesetzt. Weltweit ist eine zunehmende Anzahl der Realisierung von Batteriebusprojekten mit unterschiedlichen Nachladekonzepten zu verzeichnen. Diese Pilotprojekte dienen vornehmlich dem Erkenntnisgewinn der Betreibergesellschaften, Fahrzeug- und Komponentenhersteller hinsichtlich der Zuverlässigkeit von neuen Technologien und unterschiedlichen Nachlade- und Betriebskonzepten unter realen Betriebsbedingungen. Selbstverständlich ist eine betriebliche Verfügbarkeit des jeweiligen Gesamtsystems auf mindestens dem Niveau eines herkömmlichen Dieselbusbetriebes eine unabdingbare Voraussetzung zur Überprüfung einer zukünftigen Substitution der herkömmlichen und betrieblich bewährten durch alternative, lokal emissionsfreie Antriebstechnologie.

### Prinzip der energetischen Entkopplung

Vor mehr als 10 Jahren wurde in einem Institut der Anmelderin ein Konzept für einen vollelektrischen Busbetrieb nach dem "Docking-Prinzip" entwickelt. Hierbei fungiert ein im Fahrzeug integrierter Energiespeicher als alleinige Energieressource, welche aus wegseitig punktuell installierten Schnellladeeinrichtungen Energie aufnimmt und diese zum Antrieb des Fahrzeuges und zur Versorgung elektrischer Hilfsbetriebe bedarfsgerecht abgibt.

Zur Nachladung eines Fahrzeugenergiespeichers kommen aus heutiger Sicht drei Ladekonzepte in Betracht. Zum einen kann an den Linienendpunkten eine Schnellladung über wenige Minuten mit einer Leistung von typischerweise 250 kW die notwendige Energie für den nachfolgenden Linienumlauf bereitstellen.

Bei den aktuell zur Verfügung stehenden Energiespeichertechnologien kann es weiterhin sinnvoll sein, an einer oder mehreren Haltestellen zusätzliche Ladepunkte zu installieren (an denen das Fahrzeug zum Zwecke der Nachladung andocken kann, daher der Begriff "Docking-Prinzip").

Damit werden längere Linienführungen mit aus Sicht der Lebens-dauer akzeptablen Entladetiefen des Fahrzeugenergiespeichers möglich.

Erfahrungsgemäß steht nur an ausgewählten Haltestellen eine Aufenthaltszeit von mehr als 15 Sekunden zur Verfügung, eine hier realisierte Nachladung des Energiespeichers mit derzeit realistischen Nachladeleistungen bis zu 700 kW wird als Pulsladung bezeichnet.

Da die genannten Nachladekonzepte verfügbare Stillstandszeiten während geplanter Linienhalte ausnutzen, werden diese allgemein als Gelegenheitsladung (opportunity charging) bezeichnet.

Wird die Energie ausschließlich außerhalb der regulären Betriebszeiten nachgeladen, wird dies als Nachtladung (overnight charging) bezeichnet.

Insbesondere die ausreichende Rückkühlung der Energiespeicherelemente während der Nachladevorgänge bei hohen Umgebungstemperaturen stellt eine Herausforderung bei der Umsetzung des Docking-Prinzips dar. Hierfür ist beispielsweise eine speziell dafür ausgelegte Klimaanlage geeignet, welche in einer durch die Anmelderin geschaffenen Realisierungsform als Besonderheit einen Kältemittelspeicher aufweist.

Hierdurch wird dem speziellen Konzept einer punktuellen Energieversorgung nach dem Docking-Prinzip Rechnung getragen. Während des Nachladevorgangs der Traktionsbatterie am Linienendpunkt wird zeitgleich bzw. simultan das Kühlmedium in der Anlage mittels Energie aus der Ladestation rückgekühlt. Dies ermöglicht eine ausreichende Kühlenergiebeladung des Kältemittelspeichers für den nachfolgenden Linienumlauf, wobei hierfür gerade keine Energie aus der Traktionsbatterie entnommen werden muss.

Das Prinzip der energetischen Entkopplung der Batteriekühlung vom Fahrbetrieb wird im Sinne der Aufgabenstellung durch die erfindungsgemäße Lösung auf den für viele Einsatzfälle insbesondere von Stadtlinienbussen notwendigen Hilfsprozess der Fahrerarbeitsplatz- und Fahrgastraumheizung des Fahrzeuges übertragen.

Durch die Ablösung herkömmlicher, auf der Verbrennung von Kraftstoffen basierender durch elektrische Heizsysteme, die mit elektrischer Energie aus öffentlichen Versorgungsnetzen betrieben werden können, ist eine weitere Attraktivitätssteigerung des vollelektrischen Busbetriebs nach dem Docking-Prinzip verbunden.

### Beschreibung der Erfindung

Der der Erfindung zugrundeliegende Lösungsansatz nimmt die Vorteile der sogenannten Gelegenheitsladung (Opportunity Charging) insbesondere für Stadtlinienbusse auf. Dabei wird an Endhaltestellen oder während längerer Unterwegshalte Energie innerhalb von wenige Minuten andauernder Ladevorgänge aus wegseitiger, mit einem öffentlichen Energieversorgungsnetz verbundener, Ladeinfrastruktur nachgeladen. Die für die Batterie erforderliche (bzw. auf Grund ihres aktuellen Ladezustandes entnehmbare) Ladeleistung der Batterie liegt hierbei oftmals unter der anlagenseitig zur Verfügung stehenden Ladeleistung. "Überschüssige" d. h. nicht abgeforderte bzw. nicht abforderbare elektrische Ladeleistung kann somit für anderweitige Aufgaben (z. B. die Aufladung von Wärmespeichern) verwendet werden.

Der erfindungsgemäße Ansatz basiert also auf der Verlagerung der - mittelbaren - Heizenergiebereitstellung von der Traktionsbatterie auf die Ladeinfrastruktur.

Die erfinderische Lösung schafft daher eine neuartige, schnellladefähige und modulare Wärmespeicherheizung unter Verwendung von Latentwärmespeichermaterialien. Um unnötige Wärmeverluste konventioneller Systeme zu vermeiden, erfolgt die Positionierung im beziehungsweise in nächster Nähe zum Fahrgastraum.

An den Linienendpunkten wird das innovative Heizungssystem zeitgleich bzw. simultan zur Wiederaufladung des Fahrzeugenergiespeichers in der Kürze der zur Verfügung stehenden Zeit mit Energie aus dem stationären Energieversorgungsnetz aufgeladen.

Anschließend gibt es bis zum erneuten Ladevorgang die gespeicherte Wärme gleichmäßig an den Fahrgastraum ab.

Neben diesem Primärladekonzept ist zusätzlich die Nachladung während der Fahrt durch die Direktverwertung von Rekuperationsenergie möglich.

Um einen energieeffizienten bedarfsgerechten Betrieb der Speicherheizung zu gewährleisten, wird ein entsprechendes Energie- und Speichermanagement inklusive einer Methodik zur Ladezustandsbestimmung benötigt. Für die Umsetzung der Wärmespeicherheizung sind zwei Varianten, eine mit direktem und eine mit indirektem Wärmeeintrag in den Fahrgastraum vorgesehen.

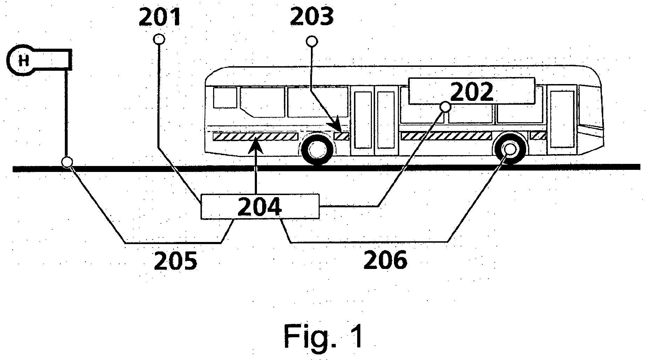

Die erläuterten Probleme im Stand der Technik bekannter Systeme zur emissionsfreien Beheizung von Fahrgasträumen vollelektrischer Stadtbusse können mit einer schnellladefähigen, effizienten, modularen Latentwärmespeicherheizung, wie sie schematisch in Fig. 1 dargestellt ist, gelöst werden. Die Fig. 1 zeigt einen systematischen Zusammenhang einer schnellladefähigen Wärmespeicherheizung. Insbesondere zeigt die Fig. 1 einen Latentwärmespeicher in einem Personenbus gemäß einer Ausführungsform der Erfindung.

Das im Latentwärmespeicher verwendete thermisch aktive Material, das beispielsweise in Form eines homogen ausgefüllten Volumens oder aber in Form von Scheiben- und/oder plattenförmigen Speichermodulen ausgeführt sein kann wird mittels elektrischer Energie, die vornehmlich an Ladestationen am Linienendpunkt oder im Bedarfsfall zusätzlich über Rekuperation zur Verfügung gestellt wird, aufgeladen.

Als thermisches Speichermaterial kommt die Verwendung von Phasenwechselmaterialien (PCM - phase-change-material) zum Einsatz. PCM weisen eine hohe spezifische Wärmespeicherdichte auf und können Wärme unter geringem Temperaturhub des

Speichermaterials speichern (bzw. wieder abgeben). Durch den dabei vollzogenen Phasenübergang z. B. von fest nach flüssig, wird ein Großteil der Wärme in Form der dafür benötigten Schmelzenthalpie gespeichert. Dieser Vorgang erfolgt isotherm.

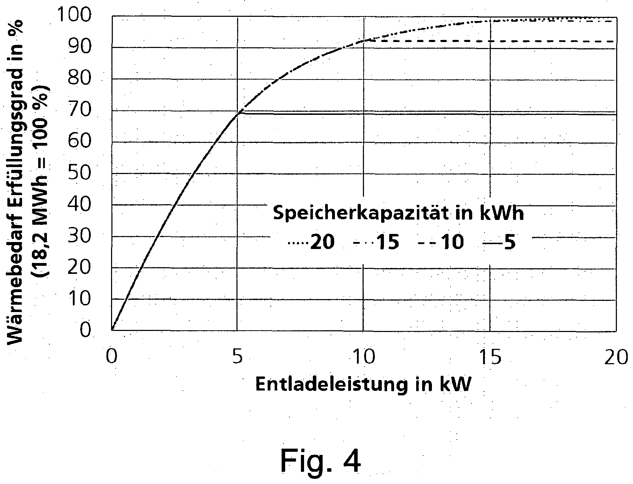

In einer ersten Untersuchung wurde die prinzipielle Umsetzbarkeit der Wärmespeicherheizung nachgewiesen. Die Grundlage dafür bildet ein von der Anmelderin entwickeltes Simulationstool zur Berechnung des jährlichen Klimatisierungs-bedarfs eines Busses in einer zeitlichen Auflösung von 5 min. In Abhängigkeit der Entladeleistung, dem angestrebten Erfüllungsgrad des Wärmebedarfs und der Zykluslänge zwischen zwei Ladevorgängen konnte eine erste Abschätzung der erforderlichen Speicherkapazität getroffen werden. Fig. 4 zeigt einen Erfüllungsgrad des Wärmebedarfs in Abhängigkeit der Entladeleistung und der Speicherkapazität (12 m Stadtbus, Zykluslänge: 1 h, Mitteleuropa). Fig. 4 ist zu entnehmen, dass eine Kapazität von 10 kWh bei einer Entladeleistung von 10 kW und einer Zykluslänge von 1h, ausreicht, um über 90 % des zu erwartenden Wärmebedarfs abzudecken.

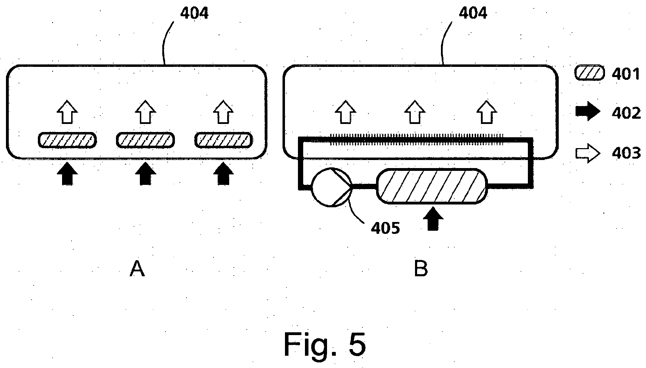

Fig. 5 zeigt eine schematische Darstellung von Wärmespeicherheizkonzepten (Fig. 5A: direkt, Fig. 5B: indirekt). In der Fig. 5A ist eine direkte Beheizung eines Fahrgastraumes durch den Latentwärmespeicher gezeigt. In der Fig. 5B ist eine indirekte Beheizung eines Fahrgastraumes durch den Latentwärmespeicher gezeigt. Nach Fig. 5 kann die Realisierung der beschriebenen Wärmespeicherheizungstechnologie mit zumindest zwei unterschiedlichen Systemkonzepten erfolgen.

In der Ausführung mit direktem Wärmeeintrag wird das Speichermaterial des Latentwärmespeichers in einzelnen Modulen untergebracht, die im Fahrgastraum variabel angeordnet werden können. Das Entladeverhalten respektive die Entladeleistung ergeben sich aus dem Zusammenspiel der thermischen Randbedingungen im Bus (Temperatur, Luftströmung), der konstruktiven Ausführung der Wärmeübertragerstrukturen des Speichers und dem Wärmetransport im Speicher selbst. Um dennoch eine Anpassung der Entladeleistung an den Heizbedarf zu ermöglichen, stehen verschiedene Optionen zur Verfügung.

Wird der Speicher aus mehreren separat aufladbaren Modulen aufgebaut, kann die gespeicherte Wärmemenge und damit die Entladeleistung in Abhängigkeit verschiedener Faktoren, wie der zu erwartenden Fahrgastanzahl (Abwärme) und der Außentemperatur angepasst werden.

Zusätzlich kann der Wärmeübergang zwischen den Speichermodulen und der umgebenden Luft durch Variation der Luftgeschwindigkeit beeinflusst werden.

Eine weitere Option stellt die Verwendung von PCM mit unterschiedlichen Schmelztemperaturen in unterschiedlichen Modulen dar, die Module mit unterschiedlichen Entladeleistungen ermöglichen.

Die indirekte Variante besteht aus 2-3 Speichermodulen, die zur Entladung von Wasser durchströmt werden und dabei die zuvor gespeicherte Wärme über konventionelle Konvektoren an den Fahrgastraum abgeben. Die Entladeleistung kann dem Heizbedarf über die Variation der Pumpendrehzahl und dem daraus resultierenden Volumenstrom angepasst werden.

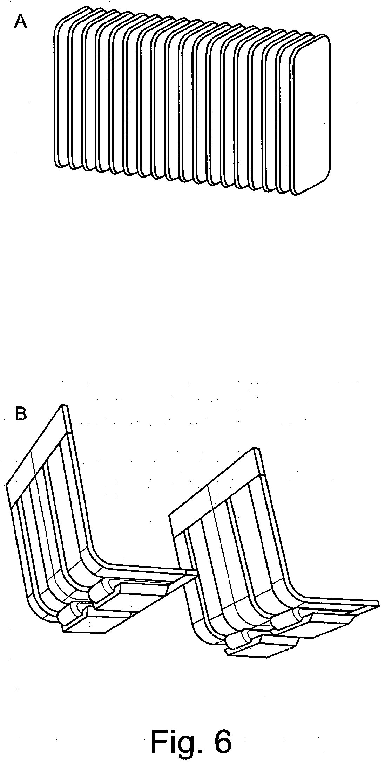

Lamellenartige PCM-Packungen mit integriertem Heizelement und Sensorik bilden den Grundbaustein für die Module der indirekten Variante. Verschiedene Konzepte für den schematischen Aufbau entsprechender Speichermodule (direkte Variante) sind in Fig. 6 dargestellt. Fig. 6 zeigt ein funktionsintegriertes Design, nämlich lamellenartige PCM-Packungen. Hierbei zeigt die Fig. 6A ein Seitenwandmodul. Fig. 6B zeigt ein Sitzmodul.

### Schnellladefähigkeit des PCM-Wärmespeichers als vorteilhafte Ausführungsform der Erfindung

Die erfindungsgemäße Lösung ermöglicht die vollständige Beizung des Fahrgastinnenraums eines vollelektrischen Stadtlinienbusses auch bei tiefen Außentemperaturen ohne für diesen Zweck Energie aus dem Traktionsenergiespeicher entnehmen zu müssen und weist gegenüber dem bekannten Stand der Technik folgende Vorteile auf:
- Die vollständige Beladung des Wärmeenergiespeichers ist innerhalb weniger Minuten möglich. Dazu werden Laderaten von etwa 10 h⁻¹ benötigt. Die Laderate ist definiert als Verhältnis von eingebrachter Wärmeleistung zur Wärmespeicherkapazität des Wärmeenergiespeichers.
- Der zur vollständigen Aufschmelzung des als Wärmespeichermaterial eingesetzten PCM notwendige Wärmeeintrag erfolgt über in der Speichermasse integrierte Heizelemente (Stäbe, Netzstrukturen, Flächenheizelemente etc.). Ein minutenschnelles, vollständiges Aufschmelzen des Materials und dessen gleichzeitiger Schutz gegenüber lokaler Überhitzung, welche die Zerstörung der Speichereigenschaften zur Folge hat, wird durch eine anwendungsgerechte Integration der in der Speichermasse integrierten Heizelemente hinsichtlich deren geometrischer Anordnung und Heizleistung dahingehend erreicht,
   dass beispielsweise eine Vielzahl von Heizelementen im Wesentlichen gleichmäßig über das Volumen des als Speichermedium fungierenden PCM verteilt sind und auf diese Weise erreicht wird, dass eine über eine kurze Zeit wirkende hohe elektrische Beladungsleistung sich möglichst homogen über das Speichervolumen ausbreitet und so insbesondere lokale Überhitzungen vermieden werden.
- Die mit der Aufschmelzung und dem Wiedererstarren verbundenen Dichteunterschiede des Materials können zur Ladezustandsbestimmung des Wärmeenergiespeichers ausgenutzt werden.

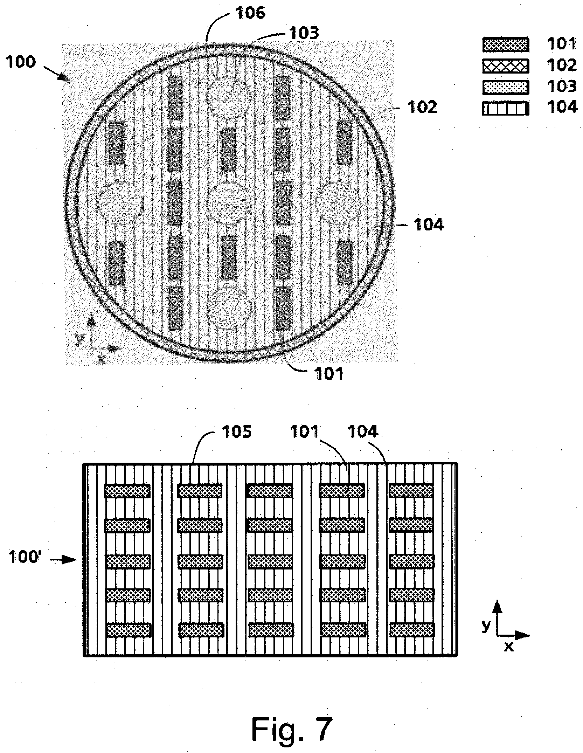

Fig. 7 zeigt mögliche Gestaltungsvarianten des schnellladefähigen PCM-Wärmespeichers als schematische Querschnittsansichten. Hierbei ist in der Fig. 7 oben ein Beispiel für die indirekte Entladung gezeigt, während in der Fig. 7 unten ein Beispiel für die direkte Entladung gezeigt ist.

### Vorteile der Erfindung

Die Anwendung der Erfindung führt zu einer Effizienzsteigeung im Vergleich zu aktuell verfügbaren elektrischen Heizsystemen für elektrisch angetriebene Fahrzeuge und insbesondere für elektrisch angetriebene Busse des öffentlichen Personennahverkehrs und entkoppelt die Energiebereitstellung für die Beheizung des Fahrgastraumes von der Traktionsbatterie.

Daraus resultieren eine erhöhte Fahrzeugreichweite respektive eine Reduktion der notwendigen Batteriekapazität und in der Folge reduzierte Anschaffungs- und Betriebskosten im Vergleich mit alternativen, emissionsfreien, elektrischen Heizungssystemen. Insbesondere werden im Vergleich zu Batteriebetriebenen Elektrospeichersystemen folgende Systemvorteile erkannt:
- Kostengünstigere Lösung
- Verschleißarme Lösung
- Flexible geometrische Auslegung zur Nutzung vorhandener Bauraum- und Gewichtsreserven
- Erhöhter Systemwirkungsgrad durch direkte Energieumwandlung

Die Verbreitung von schnellladefähigen Latentwärmespeicherheizungen in vollelektrischen Nutzfahrzeugen wie z. B. Stadtbussen, leistet bei gleichzeitiger Nutzung erneuerbarer Energien zu deren Betrieb einen entscheidenden Beitrag zur Reduktion lokaler (innerstädtisch) als auch globaler CO₂-Emissionen. Dadurch werden insbesondere die folgenden Ziele adressiert:
- "Ausbau der Elektromobilität konsequent vorantreiben und die Voraussetzungen für eine schnelle Marktdurchdringung schaffen"
- Kostenreduktion für Elektrofahrzeuge
- Steigerung der Wirkungsgrade von elektrischen Nebenaggregaten hoher Leistung
- Steigerung der Reichweiten von Elektrofahrzeugen
- Etablierung eines übergreifenden Energie- und Thermomanagements für Elektrofahrzeuge

Mit einem Aufladen, einem Beladen oder einem Laden des Latentwärmespeichers im Sinne der vorliegenden Schrift ist gemeint, dass der Latentwärmespeicher Wärmeenergie über die elektrisch wirksamen Heizelemente aufnimmt. Es findet also beim Aufladen, Beladen oder Laden des Latentwärmespeichers eine Wärmezufuhr von den Heizelementen oder von dem mindestens einen Heizelement in das Phasenwechselmaterial statt. Mit einem Entladen des Latentwärmespeichers ist im Sinne der vorliegenden Schrift gemeint, dass der Latentwärmespeicher Wärmeenergie z.B. an seine Umgebung oder an ein Wärmeträgerfluid abgibt.

Eine Wärmekapazität kann als die Wärmeenergie definiert werden, die das Phasenwechselmaterial in einem Temperaturbereich um ± 7,5 °K um eine Schmelztemperatur des Phasenwechselmaterials pro Kilo aufnehmen kann. Falls ein Schmelztemperaturbereich vorliegt, schließt der genannte Temperaturbereich von ± 7,5 °K vorzugsweise diesen Schmelztemperaturbereich ein. Eine Differenz einer höchsten Temperatur und einer geringsten Temperatur des Schmelztemperaturbereiches beträgt hierbei üblicherweise nicht mehr als 15 °K oder nicht mehr als 10 °K.

### Ausführungsformen der Erfindung

In einer ersten Ausführungsform wird ein elektrisch beheizbarer Latentwärmespeicher mit einem Phasenwechselmaterial (PCM) als Speichermedium bereitgestellt. Eine Vielzahl von elektrisch wirksamen Heizelementen sind im Wesentlichen gleichmäßig im Volumen des PCM verteilt. Alternativ oder zusätzlich ist mindestens ein elektrisch wirksames Heizelement vorgesehen, wobei eine Vielzahl von Wärmeleitstrukturen im Wesentlichen gleichmäßig im Volumen des PCM verteilt sind. Ein Verhältnis von Heizleistung der Heizelemente oder des Heizelements zu einer Wärmespeicherkapazität des Phasenwechselmaterials kann mindestens 5 h⁻¹ betragen.

Das genannte Verhältnis kann z.B. höchstens 15 h⁻¹ betragen. Das beanspruchte Verhältnis bildet eine schnelle Ladefähigkeit des Latentwärmespeichers ab. Andererseits kann durch die gleichmäßige Verteilung der Heizelemente bzw. der Wärmeleitstrukturen in dem Phasenwechselmaterial die Erwärmung des Phasenwechselmaterials möglichst gleichmäßig erfolgen, wodurch eine lokale Überhitzung des Phasenwechselmaterials trotz hoher Leistung der Heizelemente vermieden werden kann.

Eine gleichmäßige Verteilung der Heizelemente und/oder der Wärmeleitstrukturen kann z.B. dadurch erreicht werden, dass benachbarte Heizelemente und/oder benachbarte Wärmeleitstrukturen zumindest in einer Raumrichtung des Latentwärmespeichers einen gleichen Abstand zueinander aufweisen. Die Heizelemente und/oder Wärmeleitstrukturen können z.B. ein zwei- oder dreidimensionales Gitter bilden. Ohne eine gleichmäßige Anordnung der Wärmeleitstrukturen und/oder Heizelemente in dem Phasenwechselmaterial könnte sich eine keilförmige bzw. wellenförmige Aufschmelzfront beim Erwärmen des Phasenwechselmaterials durch das Heizelement ausbilden. Dies würde dem Erfindungsziel Schnelladefähigkeit entgegenwirken.

Je nach Dimension des Latentwärmespeichers können z.B. mindestens 5, mindestens 10, mindestens 15 oder mindestens 20 Heizelemente im Volumen des Phasenwechselmaterials angeordnet sein. Weiterhin können je Heizelement mindestens 5, mindestens 10, mindestens 15 oder mindestens 20 Wärmeleitstrukturen vorgesehen sein.

Die Wärmeleitstrukturen können hierbei mit dem mindestens einen Heizelement verbunden sein. Alternativ können die Wärmeleitstrukturen auch disjunkte, von dem Heizelement beabstandete und nicht mit dem Heizelement verbundene Einheiten bilden. Die Wärmeleitstrukturen können eine homogene Aufschmelzung des Phasenwechselmaterials im Latentwärmespeicher begünstigen. Zur Förderung eines Wärmeaustausches können benachbarte Wärmeleitstrukturen miteinander über Wärmebrücken verbunden sein. Die Wärmeleitstrukturen können parallel zueinander ausgerichtet sein. Weiter können die Wärmeleitstrukturen im Wesentlichen senkrecht zu dem mindestens einen Heizelement angeordnet sein.

Die Wärmeleitstrukturen sind bevorzugt aus einem wärmeleitfähigen Metall, wie Stahl, Aluminium oder Kupfer, gefertigt und können z.B. als Stäbe oder Platten ausgebildet sein. Eine Wandstärke der Platten und/oder ein Radius oder Durchmesser der Stäbe können z.B. höchstens 5 mm betragen. Die Wandstärke und/oder der Radius oder Durchmesser können hierbei mindestens 0,1 mm betragen. Eine Längsrichtung der Wärmeleitstrukturen kann parallel zur Schwerkraft ausgerichtet sein.

In einer weiteren Ausführungsform können benachbarte Heizelemente miteinander verbunden sein, beispielsweise über Wärmebrücken. Die Heizelemente können alternativ auch disjunkte, voneinander beabstandete Einheiten bilden.

Wenn nachfolgend von lediglich "einem Heizelement" die Rede ist, ist hiermit auch "eine Vielzahl von Heizelementen" gemeint und andersherum. Ein Heizelement im Sinne der vorliegenden Schrift kann insbesondere als
- Heizdraht mit oder ohne Isolation; und/oder
- Flächenheizelement, z.B. ein Flächenheizelement aus Heizdraht und isolierender Hülle (z.B. Silikon oder Polyimide wie Kapton); und/oder
- Heizstab, der sich in einem mit Wärmeleitstrukturen ausgestatteten Rohr befindet, das im Kontakt zum PCM steht; und/oder
- Heizpatrone, Heizkörper, Heizwendel, Heizleiter, Heizband, Heizmanschette oder Heizmatte
ausgebildet sein. Es können verschiedenartige Heizelemente in einen einzigen Latentwärmespeicher integriert werden. Weitere Gestaltungsmöglichkeiten für das Heizelement sind dem Fachmann bekannt.

Für eine möglichst schnelle Erwärmung des Phasenwechselmaterials ist es vorteilhaft, wenn eine Oberfläche der Heizelemente (im Folgenden: Heizelementoberfläche) relativ groß zu einer Menge des zu erwärmenden Phasenwechselmaterials ist. Ein Verhältnis von einer Heizelementoberfläche zu einer Wärmespeicherkapazität des Latentwärmespeichers ist zum Beispiel mindestens 2 cm²/Wh. Für eine effektive systemische Wärmespeicherkapazität des Gesamtsystems in Wh/kg bzw. Wh/I - sowie auch wegen der Kosten für größere Heizelementflächen kann das genannte Verhältnis höchstens 20 cm²/Wh betragen.

In einer Weiterbildung beträgt eine mittlere Heizleistungsdichte der Heizelemente oder des Heizelements mindestens 0,25 W/cm² oder mindestens 0,5 W/cm² oder mindestens 0,75 W/cm². Die mittlere Heizleistungsdichte kann einen Höchstwert von 2,5 W/cm² oder 2,25 W/cm² oder 2 W/cm² oder 1,75 W/cm² haben. Die Heizleistungsdichte kann hierbei unabhängig von der Wahl des Phasenwechselmaterials sein. Die mittlere Heizleistungsdichte ist hierbei die Leistung, die im Mittel pro Fläche durch das Heizelement oder durch die Heizelemente abgegeben wird. Es kann also sein, dass eine räumliche Verteilung der Heizleistung der Heizelemente variiert (s. unten).

In einer Ausführungsform sind zumindest die wirksamen Teile der Heizelemente oder des Heizelements, also die wärmeabgebenden Teile, unabhängig von einem Aggregatzustand des Phasenwechselmaterials vollständig mit dem Phasenwechselmaterial bedeckt. Die wirksamen Teile der Heizelemente sind typischerweise die stromdurchflossenen Teile der Heizelemente. Wenn Teile des Heizelements nicht mit dem Phasenwechselmaterial in Kontakt stehen, also nicht vollständig mit diesem bedeckt sind, können aufgrund einer geringeren Wärmeübertragung vom Heizelement an die Luft an diesen Teilen des Heizelements unzulässig hohe Temperaturen entstehen. Dies kann dazu führen, dass das Phasenwechselmaterial an der dreifachen Grenzschicht Luft/Heizelement/Phasenwechselmaterial zerstört oder zersetzt wird.

Flüssiges (warmes) Phasenwechselmaterial hat in der Regel eine geringere Dichte als festes (kaltes) Phasenwechselmaterial. Hierdurch wird flüssiges Phasenwechselmaterial nach oben transportiert. Um eine möglichst gleichmäßige Temperatur innerhalb des Phasenwechselmaterials zu erzielen, kann es vorteilhaft sein, die Heizleistung des Heizelements über eine Ausdehnung des Heizelements zu variieren. In einer Weiterbildung ist das Heizelement derart ausgebildet, dass eine Heizleistung des Heizelements über eine Höhe des Latentwärmespeichers nach oben hin abnimmt. Das Heizelement kann zudem derart ausgestaltet sein, dass eine Heizleistung des Heizelements in einer Richtung senkrecht zur Schwerkraft nach außen hin zunimmt. Somit kann zur Erzielung einer homogenen Temperatur im Phasenwechselmaterial eine Wärmeabgabe durch den Latentwärmespeicher an seine Umgebung berücksichtigt werden. In einem äußeren Randbereich des Latentwärmespeichers kann die Heizleistung des Heizelements in horizontaler Richtung also höher sein, als in der Mitte des Phasenwechselmaterials.

Es kann vorteilhaft sein, wenn die Wärmeleitstrukturen zumindest bei Vorliegen eines festen Aggregatzustandes des Phasenwechselmaterials teilweise aus dem Phasenwechselmaterial herausragen. Je nach Dimension des Latentwärmespeichers können die Wärmeleitstrukturen z.B. über eine Höhe von mindestens 0,5 cm und/oder höchstens 2 cm aus dem Phasenwechselmaterial herausragen. Damit können sogenannte "Sollschmelzstellen" an der Phasenwechselmaterialoberfläche geschaffen werden.

Beim Verflüssigen des Phasenwechselmaterials aufgrund der Erwärmung durch das mindestens eine Heizelement können die zuvor aus dem Phasenwechselmaterial herausragenden Teile der Wärmeleitstrukturen durch eine Dichteverringerung bzw. Volumenvergrößerung der Wärmeleitstrukturen anschließend vollständig durch das Phasenwechselmaterial bedeckt werden. Es kann vorgesehen sein, dass ein Längsschnitt der Wärmeleitstrukturen jeweils dreieckig, viereckig, rechteckig, quadratisch oder trapezförmig ist und/oder eine sich nach oben hin verjüngende konvexe oder konkave Form hat.

Durch die oben beschriebenen Wärmeleitstrukturen kann eine kontrollierte, bevorzugte Ausdehnung des Phasenwechselmaterials bei Erwärmung durch die Heizelemente und/oder Wärmeleitstrukturen realisiert werden. Des Weiteren kann durch die Wärmeleitstrukturen eine Vermeidung hoher lokaler Druckgradienten verhindert werden.

Der Latentwärmespeicher kann eine Messvorrichtung zur Bestimmung einer Dichte und/oder eines Volumens und/oder einer Füllhöhe und/oder einer Temperatur des Phasenwechselmaterials und/oder eines Innenraumdruckes im Latentwärmespeicher umfassen. Die Messvorrichtung kann ausgestaltet sein, anhand der Dichte und/oder des Volumens und/oder der Füllhöhe und/oder der Temperatur des Phasenwechselmaterials und/oder eines Innenraumdruckes im Latentwärmespeichereine durch den Latentwärmespeicher gespeicherte Wärmemenge zu bestimmen. Prinzipiell reicht es für die Bestimmung der gespeicherten Wärmemenge in dem Phasenwechselmaterialaus, wenn lediglich die Dichte oder eine der anderen genannten Messgrößen des Phasenmaterials gemessen wird. Die Genauigkeit der Messung kann jedoch mittels zusätzlicher Volumen-, Druck-, Füllhöhen-, und Temperaturmessungen gesteigert werden. Die Bestimmung der gespeicherten Wärmemenge kann z.B. an eine mit der Messvorrichtung verbundenen Anzeigevorrichtung übermittelt werden, z.B. über eine Funkverbindung zwischen Messvorrichtung und Anzeigevorrichtung.

In einer Ausbildung hat der Latentwärmespeicher ein Gehäuse, in dem das Phasenwechselmaterial angeordnet ist, wobei das Gehäuse fluiddicht ausgebildet ist. Fluiddicht soll hierbei insbesondere luftdicht, wasserdicht und/oder phasenwechselmaterial-dicht einschließen. Hierdurch kann ein Austritt von gegebenenfalls gasförmigem Phasenwechselmaterial aus dem Gehäuse vermieden werden. Um darüberhinaus einer chemischen Reaktion von flüssigem und/oder gasförmigem Phasenwechselmaterial mit im Gehäuse befindlicher Luft zu vermeiden, kann das Gehäuse vakuumdicht ausgebildet sein. Das Gehäuse kann z.B. als metallisches Gehäuse oder als eine Kunststoffhülle ausgestaltet sein.

Das Phasenwechselmaterial kann eine Schmelztemperatur von mindestens 50 °C und/oder höchstens 120 °C haben. Bei derartigen Schmelztemperaturen kann der Latentwärmespeicher z.B. als Heizung in Räumen eingesetzt werden, in denen sich Menschen aufhalten. Das Phasenwechselmaterial kann eine Schmelzenthalpie von mindestens 100 oder mindestens 200 oder mindestens 300 kJ/kg aufweisen. Das Phasenwechselmaterial ist vorzugsweise elektrisch nicht leitend ist, da dann keine weiteren Maßnahmen zur elektrischen Isolierung notwendig sind.

Ein bevorzugtes Phasenwechselmaterial ist Paraffin. Für die physikalischen Eigenschaften von Paraffinen, wie z.B. Schmelzenthalpie h_{Schmelz}, Schmelztemperatur T_{Schmelz} und spezifische Wärmekapazität cₚ wird auf die oben stehende Tabelle 1 verwiesen. Paraffin ist elektrisch nicht leitend und hat auch den Vorteil, dass es Stöße und mechanische Schwingungen sowohl im festen als auch im flüssigen Zustand effektiv zu dämpfen vermag.

In einer weiteren Ausbildung umfasst der Latentwärmespeicher eine Vielzahl von separat aufladbaren Speichermodulen (vgl. obige Ausführungen auf S. 19 und Figuren 1, 5 und 6). Beispielsweise weisen mindestens zwei der separat aufladbaren Module jeweils unterschiedliche Phasenwechselmaterialien mit jeweils unterschiedlichen Schmelztemperaturen auf. In einer Ausführungsform umfasst ein Speichermodul eine Vielzahl von PCM-Zellen, die z.B. miteinander verbunden sind. Eine PCM-Zelle umfasst hierbei in der Regel Phasenwechselmaterial, ein Heizelement oder mehrere Heizelemente und ein Gehäuse für das Phasenwechselmaterial.

Der Latentwärmespeicher ist typischerweise derart ausgebildet, dass eine Wärmeabgabe des Latentwärmespeichers an seine Umgebung, beispielsweise einen Fahrgastinnenraum und/oder Fahrzeuginnenraum eines Fahrzeuges, bei Vorliegen eines zumindest teilweise flüssigen Phasenwechselmaterials mindestens 1 kW oder mindestens 3 kW oder mindestens 5 kW beträgt. Eine Wärmespeicherkapazität des Latentwärmespeichers kann mindestens 0,25 kWh oder mindestens 0,5 kWh oder mindestens 0,75 kWh oder mindestens 1 kWh betragen. Die weiter oben definierte spezifische Wärmekapazität des Phasenwechselmaterials ist bevorzugt größer als 1,5 kJ/kg oder größer als 2,0 kJ/kg. Für ein Phasenwechselmaterial mit einer spezifischen Wärmekapazität von 64 Wh/kg ergibt sich bei einer Wärmespeicherkapazität des Latentwärmespeichers von mindestens 0,25 kWh eine Masse an Phasenwechselmaterial von mindestens 3,9 kg.

Der Latentwärmespeicher weist in einer Ausführungsform mindestens ein Fluidrohr für ein Wärmeträgerfluid zum Abführen der Wärme des Latentwärmespeichers auf. Das Fluidrohr kann zum Beispiel als Wärmerohr ausgestaltet sein. Üblicherweise verläuft das Fluidrohr durch das Phasenwechselmaterial, damit ein Wärmetausch zwischen dem Phasenwechselmaterial und dem Wärmeträgerfluid in dem Fluidrohr effizient stattfindet. In einer Ausführungsform ist das Phasenwechselmaterial umgeben durch einen Wärmetauscher. In einer Ausbildung ist der Latentwärmespeicher durch eine wärmeisolierende Schicht umgeben. Das oben genannte Gehäuse des Latentwärmespeichers kann auch mit einer wärmeisolierenden Schicht versehen sein oder eine derartige wärmeisolierenden Schicht als Ummantelung aufweisen oder aus einer derartigen wärmeisolierenden Schicht bestehen.

Außerdem wird mit der Erfindung ein Heizsystem mit dem Latentwärmespeicher der zuvor beschriebenen Art bereitgestellt. Das Heizsystem umfasst in einer Ausführungsform einen Latentwärmespeicher der oben beschriebenen Art, einen Fluidkreislauf und mindestens einen Heizkörper oder mindestens einen Konvektor. Der Heizkörper oder Konvektor kann z.B. über einen Heizungsvorlauf und einen Heizungsnachlauf mit dem genannten Fluidrohr des Latentwärmespeichers verbunden sein. Zur Förderung des Wärmeträgerfluids kann eine Pumpe vorgesehen sein. Als Wärmeträgerfluid kommt zum Beispiel Wasser in Frage.

In einer weiteren Ausführungsform umfasst das Heizsystem den Latentwärmespeicher und mindestens ein Wärmerohr. Für weitere Details und die Funktionsweise des Wärmerohres wird auf folgende Veröffentlichung verwiesen: DE 10 2009 058 842 A1.

Außerdem wird mit der Erfindung ein Fahrzeug mit dem Latentwärmespeicher der zuvor beschriebenen Art bereitgestellt. Unter Fahrzeugen im Sinne der vorliegenden Schrift werden insbesondere Kraftfahrzeuge verstanden, die eine Traktionsbatterie zum Antreiben des Fahrzeuges aufweisen. Hierunter fallen zum einen rein elektrisch angetriebene Fahrzeuge, zum anderen aber auch Hybridfahrzeuge. Zudem kommt als Fahrzeug insbesondere ein Kraftfahrzeug mit vielen Sitzen zur Beförderung von Personen (Bus) in Frage. Der Latentwärmespeicher ist vorzugsweise zum Beheizen eines Fahrgastinnenraumes und/oder Fahrzeuginnenraumes des Fahrzeuges ausgestaltet. Hierbei kann der Latentwärmespeicher in dem Fahrgastinnenraum, in dem Fahrzeuginnenraum oder in unmittelbarer Nähe des Fahrgastinnenraumes und/oder des Fahrzeuginnenraumes angeordnet sein.

Bei elektrisch angetriebenen Fahrzeugen kann Bremsenergie häufig mit einem elektrischen Generator in elektrische Energie umgewandelt werden, d.h. zu rekuperieren. Das Fahrzeug ist insbesondere derart ausgestaltet, dass die Bestromung des Heizelements des Latentwärmespeichers über während eines Bremsvorganges generierte Rekuperationsenergie erfolgt.

Die Erfindung schlägt außerdem die Verwendung eines elektrisch beheizbaren Latentwärmespeichers zur Beheizung von Fahrgastinnenräumen und/oder Fahrzeuginnenräumen von elektrisch angetriebenen Fahrzeugen vor. Die Aufladung des Speichers erfolgt hierbei vorzugsweise an einer Ladestation für Elektrofahrzeuge.

Des Weiteren wird mit der Erfindung ein Verfahren zur Aufladung eines elektrisch beheizbaren Latentwärmespeichers der zuvor beschriebenen Art bereitgestellt.

Demnach erfolgt die Aufladung, z.B. die elektrische Aufladung, des Latentwärmespeichers vorzugsweise zeitgleich mit der Ladung der Traktionsbatterie eines elektrisch angetriebenen Fahrzeugs. Es kann alternativ vorgesehen sein, dass die Aufladung des Latentwärmespeichers öfter erfolgt, als die Ladung der Traktionsbatterie. Hierdurch kann der Latentwärmespeicher relativ klein gehalten werden. Weiter können die Traktionsbatterie und der Latentwärmespeicher je nach Kapazität einer Ladestation während eines Ladevorganges im Wechsel aufgeladen werden.

In einer Weiterbildung erfolgt die elektrische Aufladung des Latentwärmespeichers an einer Ladestation für elektrisch angetriebene Fahrzeuge. Für die Aufladung des Latentwärmespeichers wird der Ladestation zumindest partiell elektrische Leistung entnommen, die durch die zeitgleich ablaufende Batterieladung nicht abverlangt wird oder nicht abverlangbar ist.

Mit dem vorgeschlagenen Verfahren bzw. mit der vorgeschlagenen Verwendung des Latentwärmespeichers kann der Latentwärmespeicher zyklisch Beladen und Entladen werden. Eine Zyklendauer beträgt üblicherweise mindestens 0,5 und/oder höchstens 2 Stunden. Hierdurch eignet sich der vorgeschlagene Latentwärmespeicher bzw. seine Verwendung bzw. das vorgeschlagene Verfahren sehr gut für elektrisch betriebene Stadtbusse oder Linienbusse, die den vorgeschlagenen Latentwärmespeicher zur Beheizung des Fahrgastinnenraumes und/oder Fahrzeuginnenraumes aufweisen.

Nachfolgend wird die Erfindung anhand beigefügter Figuren 5-12 weiter erläutert.

Die Figur 5 zeigt eine schematische Darstellung von Wärmespeicherkonzepten gemäß Ausführungsformen der Erfindung. In beiden Fällen sind die Latentwärmespeicher für eine Beheizung eines Fahrgastinnenraumes und/oder Fahrzeuginnenraumes ausgestaltet. In der Fig. 5 links (Fig. 5A) ist zu sehen, dass der Latentwärmespeicher, welcher als schnelladefähiges PCM-Speicherelement dargestellt ist, seine gespeicherte Wärme direkt an den Fahrgastraum abgibt. In der Fig. 5 rechts (Fig. 5B) ist zusätzlich ein Heizkreislauf vorhanden, mittels dessen die in dem Latentwärmespeicher gespeicherte Wärme in den Fahrgastraum geleitet wird.

Die Fig. 6 zeigt zwei mögliche Module eines Latentwärmespeichers der Fig. 5 links. Der Latentwärmespeicher kann der Fig. 6 zufolge als Seitenwandmodul (Fig. 6A) oder als Sitzmodul (Fig. 6B) ausgestaltet sein. Die Erfindung ist jedoch auf die in der Fig. 6 gezeigten Ausführungsformen nicht beschränkt.

Die Eigenschaften der Latentwärmespeicher der Figuren 5 und 6 werden mit Bezug auf die Figuren 7-11 näher beschrieben.

Die Figur 7 zeigt zwei Schnitte von Ausgestaltungen eines Latentwärmespeichers 100, 100'. Der Latentwärmespeicher 100, 100' weist eine Vielzahl von elektrischen Heizelementen 101 auf, die in ein Phasenwechselmaterial 104 eingebettet sind. Unabhängig von einer Phase des Phasenwechselmaterials 104 ist das elektrische Heizelement 101, insbesondere die stromdurchflossenen Teile der Heizelemente 101, vollständig mit dem Phasenwechselmaterial 104 bedeckt. Die Heizelemente 101 bilden ein regelmäßiges Gitter innerhalb des Phasenwechselmaterials 104, wobei benachbarte Heizelemente 101 zumindest in einer Raumrichtung einen gleichen Abstand zueinander aufweisen. Wie in der obigen Abbildung und unteren Abbildung der Fig. 7 zu erkennen ist, unterscheidet sich der Abstand benachbarter Heizelemente 101 in x-Richtung von dem Abstand benachbarter Heizelemente 101 in y-Richtung. Die Heizelemente 101 sind als Heizstäbe ausgebildet und erstrecken sich in z-Richtung parallel zu einer Ausdehnung des Latentwärmespeichers 100, 100' in z-Richtung.

Der Latentwärmespeicher 100' weist ein fluiddichtes Gehäuse 105 auf, damit das Phasenwechselmaterial 104 während einer Erwärmung durch die elektrisch wirksamen Heizelemente 101 nicht aus dem Gehäuse 105 treten kann. Durch den Latentwärmespeicher 100' kann Wärmeenergie direkt an seine Umgebung abgegeben werden, vgl. Abbildung 5 links.

Im Gegensatz zum Latentwärmespeicher 100' weist der Latentwärmespeicher 100 eine Wärmeisolation 102 auf, die zudem als fluiddichte Hülle funktioniert. Durch die Wärmeisolation wird eine Wärmeabgabe des Latentwärmespeichers 100 an seine Umgebung minimiert. Stattdessen sind im Latentwärmespeicher 100 Fluidrohre 106 vorgesehen, die mit einem Wärmeträgerfluid 103 gefüllt sind. Das Wärmeträgerfluid 103 kann eine Flüssigkeit oder ein Gas sein. Im gezeigten Ausführungsbeispiel ist das Wärmeträgerfluid 103 Wasser. Durch das Wärmeträgerfluid 103 kann eine im Phasenwechselmaterial 104 des Latentwärmespeichers gespeicherte Wärmeenergie abgeführt werden. Die Fluidrohre 106 sind beispielsweise Teil eines Heizkreislaufes und mit mindestens einem Kollektor oder mindestens einem Heizkörper verbunden. Mittels einer Pumpe kann das Wärmeträgerfluid 103 durch den Heizkreislauf befördert werden (vgl. Fig. 5 rechts).

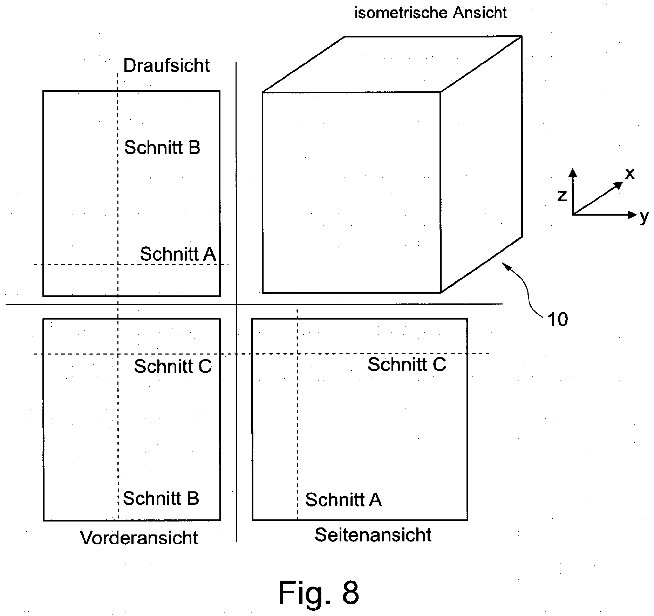

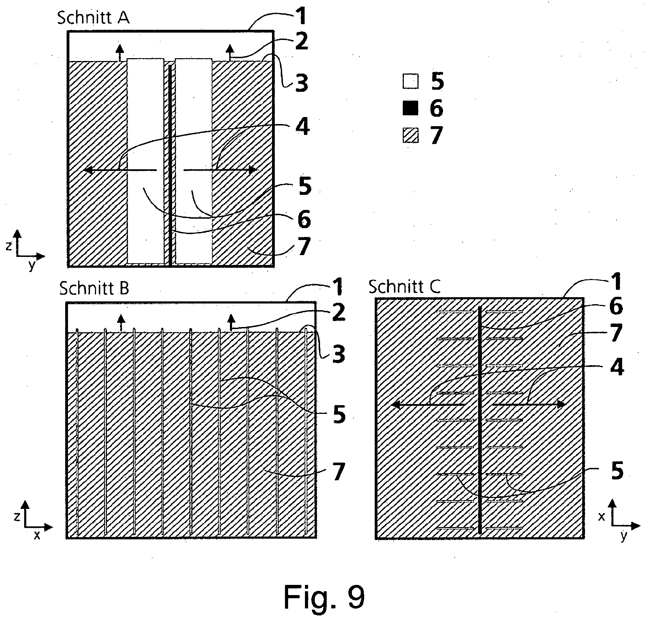

Die Figur 8 zeigt eine isometrische Ansicht eines Latentwärmespeichers 10. Die Figur 9 zeigt die Schnitte A, B und C des Latentwärmespeichers 10 der Figur 8.

Der Latentwärmespeicher 10 der Figuren 8 und 9 unterscheidet sich von dem Latentwärmespeicher 100' der Fig. 7 (unten) lediglich darin, dass statt einer Vielzahl von stabförmigen Heizelementen 101 ein einziges plattenförmiges Heizelement 6 vorgesehen ist. Außerdem ist eine Vielzahl von Wärmeleitstrukturen 5 in das Phasenwechselmaterial 7 eingebettet. Die Wärmeleitstrukturen 5 sind von dem Heizelement 6 beabstandet und bilden ein regelmäßiges Gitter innerhalb des Phasenwechselmaterials 7. Alternativ können die Wärmeleitstrukturen auch mit dem Heizelement verbunden sein, wobei beispielsweise eine direkte Verbindung der Wärmeleitstrukturen 5 mit dem Heizelement 6 oder eine indirekte Verbindung der Wärmeleitstrukturen 5 mit dem Heizelement 6 über metallische Wärmebrücken in Frage kommt.

Das Phasenwechselmaterial 7 liegt in den Figuren 8 und 9 in seinem festen Aggregatzustand vor. Im Schnitt A der Fig. 9 ist zu erkennen, dass die Wärmeleitstrukturen 5 teilweise aus einer Oberfläche 3 des Phasenwechselmaterials 7 herausragen. Hierdurch werden "Sollschmelzstellen" gebildet. In den Schnitten A und C ist ein Verlauf einer Aufschmelzfront 4 angedeutet. Die Wärmeleitstrukturen sind parallel zum Verlauf der Aufschmelzfront 4 in dem Phasenwechselmaterial angeordnet. Die Wärmeleitstrukturen sind als Metallplatten ausgebildet und dienen einer verbesserten Wärmeleitung in dem Latentwärmespeicher 10. Weiterhin dienen die Wärmeleitstrukturen einer Reduktion des Temperaturgradienten im Phasenwechselmaterial zumindest in z-Richtung. Hierdurch können eine Homogenisierung der Aufschmelzfront 4 und eine Verbesserung der Wärmeleitung im Phasenwechselmaterial erzielt werden.

Während in den Figuren 8 und 9 lediglich ein Heizelement gezeigt ist, können in weiteren Ausführungsformen auch mehrere Heizelemente 6 vorgesehen werden.

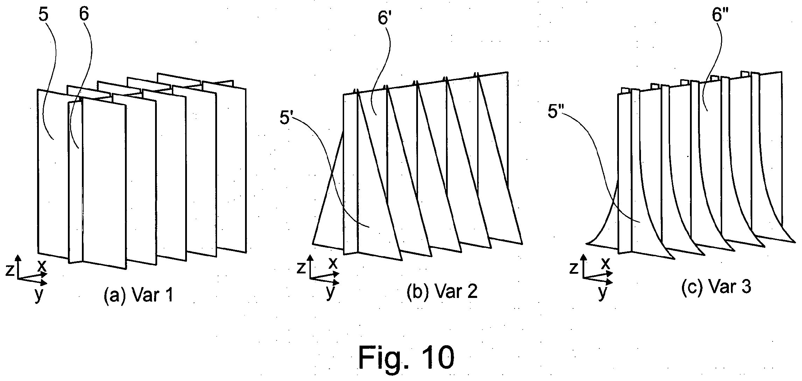

In der Fig. 10 sind verschiedene Ausführungsformen von Wärmeleitstrukturen 5, 5', 5" mit einem plattenförmigen Heizelement 6, 6', 6" gezeigt. Die Wärmeleitstrukturen 5, 5', 5" sind insbesondere zur Verwendung in dem in der Fig. 8 gezeigten Latentwärmespeicher 10 geeignet. Die Wärmeleitstrukturen 5, 5', 5" der Fig. 10 (a), (b) und (c) haben in einem Längsschnitt eine rechteckige Form, eine dreieckige Form bzw. eine sich nach oben hin verjüngende konkave Form. Durch Einstellen bzw. Variation der Form der Wärmeleitstrukturen kann ein Verlauf der Aufschmelzfront 4 beeinflusst werden.

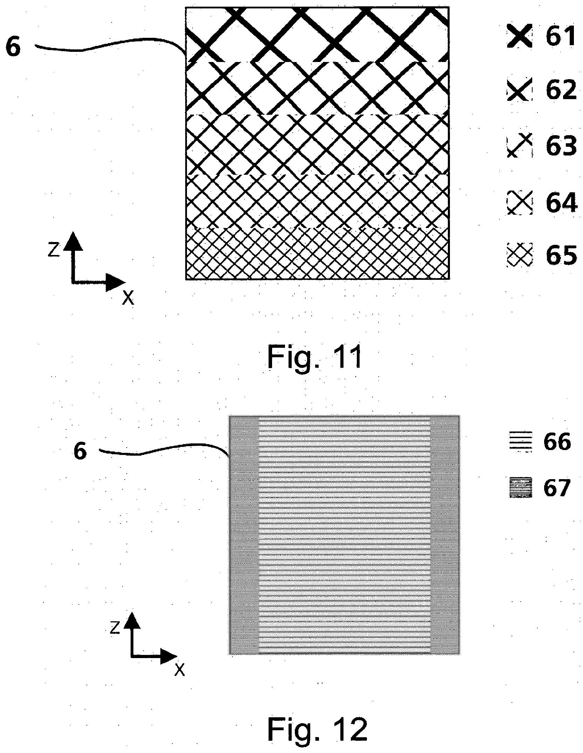

Die Fig. 11 zeigt einen Schnitt eines plattenförmigen Heizelements 6 mit einer räumlich variierenden Heizleistung. Die Heizleistung des Heizelements 6 verringert sich hierbei schrittweise in z-Richtung von einem unteren Teilbereich 65 bis zu einem oberen Teilbereich 61. Durch die räumlich variierende Heizleistung kann eine Oberflächentemperatur des Heizelements 6 auf einen konstanten Wert gehalten werden. Das Heizelement 6 wird bevorzugt in dem oben beschriebenen Latentwärmespeicher 10 eingesetzt werden. Alternativ oder zusätzlich kann es vorgesehen sein, dass das Heizelement 6 derart ausgestaltet ist, dass eine Heizleistung in einer horizontalen x-Richtung senkrecht zur Schwerkraft nach außen hin zunimmt. Eine derartige Anordnung ist in der Fig. 12 gezeigt.

Die Fig. 12 zeigt einen Schnitt eines Heizelements mit einer in x-Richtung variierenden Heizleistung eines Latentwärmespeichers 10 mit Teilbereichen 66 und 67. Um Wärmeverluste an den Rändern des Latentwärmespeichers 10 zu kompensieren, vergrößert sich die Heizleistung des Heizelements 6 schrittweise in x-Richtung von einem mittleren Bereich 66 bis zu einem Randbereich 67. Die Latentwärmespeicher 100, 100', 10 der Abbildungen 7, 8 und 9 weisen weitere Gemeinsamkeiten auf:
Das Phasenwechselmaterial der Latentwärmespeicher 100, 100' und 10 ist in den gezeigten Ausführungsbeispielen Paraffin, je nach Anwendung mit einer Schmelztemperatur im Bereich 50 °C - 120 °C.

Im Phasenwechselmaterial 104, 7 ist eine nicht-dargestellte Messvorrichtung zur Bestimmung der Dichte, des Volumens und der Temperatur des Phasenwechselmaterials vorhanden. Die Messeinrichtung ist ausgestaltet anhand der Dichte, des Volumens und der Temperatur des Phasenwechselmaterials 104, 7 die durch den Latentwärmespeicher 100, 100', 10 gespeicherte Wärmemenge zu bestimmen. Optional kann die Messeineinrichtung alternativ oder zusätzlich ausgestaltet sein, für eine Bestimmung der durch den Latentwärmespeicher 100, 100' und 10 gespeicherte Wärmemenge eine Füllhöhe des Phasenwechselmaterials und/oder einen Innenraumdruck im Latentwärmespeicher zu messen.

Der Latentwärmespeicher 100, 100', 10 ist derart ausgebildet, dass ein Verhältnis von Heizleistung der Heizelemente 101, 6 zu einer Wärmespeicherkapazität des Latentwärmespeichers 100, 100', 10 insbesondere des Phasenwechselmaterials 104, 7, 10 h⁻¹ beträgt. Eine Heizleistungsdichte der Heizelemente 101, 6 beträgt 1 W/cm², während ein Verhältnis von einer spezifischen Heizoberfläche der Heizelemente 101, 6 zu einer Wärmespeicherkapazität des Latentwärmespeichers 100, 100', 10 beispielsweise 10 cm²/Wh beträgt. Die Latentwärmespeicher 100, 100', 10 ist insbesondere geeignet zum Beheizen eines Fahrgastinnenraums oder Fahrzeuginnenraumes, wie z.B. in den Figuren 1, 5 und 6 angedeutet.

Weitere Verwendungsmöglichkeiten der Latentwärmespeicher 100, 100', 10 ergeben sich aus den obigen Ausführungen. Außerdem sind mit den elektrisch beheizbaren Latentwärmespeichern 100, 100', 10 die weiter oben geschilderten Verfahren zur Aufladung eines elektrisch beheizbaren Latentwärmespeichers durchführbar.

### Bezugszeichenliste:

- 1: Luftdichte Zellhülle
- 2: Ausdehnungsrichtung Phasenwechselmaterial
- 3: Oberfläche des Phasenwechselmaterials
- 4: Verlauf der Aufschmelzfront
- 5: Wärmeleitstruktur
- 5': Wärmeleitstruktur
- 5": Wärmeleitstruktur
- 6: elektrisches Flächenheizelement
- 6': elektrisches Flächenheizelement
- 6": elektrisches Flächenheizelement
- 7: Phasenwechselmaterial
- 10: Latentwärmespeicher
- 61: Teilbereich Heizelement
- 62: Teilbereich Heizelement
- 63: Teilbereich Heizelement
- 64: Teilbereich Heizelement
- 65: Teilbereich Heizelement
- 66: Teilbereich Heizelement
- 67: Teilbereich Heizelement
- 100: Latentwärmespeicher
- 100': Latentwärmespeicher
- 101: Heizelement
- 102: Wärmeisolation
- 103: Wärmeträgerfluid
- 104: Phasenwechselmaterial
- 105: Gehäuse
- 106: Fluidrohr
- 201: Außentemperatur
- 202: Innentemperatur 18 °C
- 203: 10 kWh Heizleistung gebunden in PCM pro Fahrzyklus in der Stadt
- 204: Ladestrategie
- 205: Schnellladung an der Endhaltestelle in ca. 6 Minuten
- 206: Ladung durch Rekuperation
- 301: Zustandspunkt
- 302: Zustandspunkt
- 303: Zustandspunkt
- 304: Zustandspunkt
- 305: Kondensator
- 306: Drosselventil
- 307: Verdampfer
- 308: Verdichter
- 401: schnellladefähiges PCM-Speicherelement
- 402: elektrische Energie
- 403: thermische Energie
- 404: Fahrgastraum
- 405: Pumpe

## Patentansprüche

1. Fahrzeug mit einem elektrisch beheizbaren Latentwärmespeicher (100, 100', 10) mit einem Phasenwechselmaterial (PCM) (104, 7) als Speichermedium zum Beheizen eines Fahrgastinnenraumes und/oder Fahrzeuginnenraumes, wobei der Latentwärmespeicher ein fluiddichtes Gehäuse aufweist, in dem das PCM angeordnet ist, wobei eine Vielzahl von elektrisch wirksamen Heizelementen (101) im Wesentlichen gleichmäßig im Volumen des PCM (104, 7) verteilt sind und/oder dass mindestens ein elektrisch wirksames Heizelement (6) vorgesehen ist und eine Vielzahl von Wärmeleitstrukturen (5) im Wesentlichen gleichmäßig im Volumen des PCM (104, 7) verteilt sind, **dadurch gekennzeichnet, dass** ein Verhältnis von Heizleistung der Heizelemente (101) oder des Heizelements zu einer Wärmespeicherkapazität des Phasenwechselmaterials (104) mindestens 5 h⁻¹ beträgt, wobei die wirksamen Teile der Heizelemente (101) oder des Heizelements (6) unabhängig von einem Aggregatzustand des Phasenwechselmaterials (104, 7) vollständig mit dem Phasenwechselmaterial (104, 7) bedeckt sind.

2. Fahrzeug (100, 100', 10) nach Anspruch 1, **dadurch gekennzeichnet, dass** ein Verhältnis von einer spezifischen Heizoberfläche der Heizelemente (101) oder des Heizelements (6) zu einer Wärmespeicherkapazität des Latentwärmespeichers mindestens 2 cm²/Wh beträgt.

3. Fahrzeug nach einem der vorstehenden Ansprüche, **dadurch gekennzeichnet, dass** eine mittlere Heizleistungsdichte der Heizelemente (101) oder des Heizelements (6) mindestens 0,25 W/cm² beträgt.

4. Fahrzeug (100, 100', 10) nach einem der vorstehenden Ansprüche, **dadurch gekennzeichnet, dass** die Wärmeleitstrukturen (5) zumindest bei Vorliegen eines festen Aggregatzustandes des Phasenwechselmaterials (104, 7) teilweise aus dem Phasenwechselmaterial (104, 7) herausragen.

5. Fahrzeug (100, 100', 10) nach einem der vorstehenden Ansprüche, **dadurch gekennzeichnet, dass** ein Längsschnitt der Wärmeleitstrukturen (5) jeweils dreieckig, viereckig, rechteckig, quadratisch, trapezförmig ist und/oder eine sich nach oben hin verjüngende konvexe oder konkave Form hat.

6. Fahrzeug (100, 100', 10) nach einem der vorstehenden Ansprüche, umfassend eine Messvorrichtung zur Bestimmung einer Dichte und/oder eines Volumens und/oder einer Füllhöhe und/oder einer Temperatur des Phasenwechselmaterials (104, 7) und/oder eines Innenraumdruckes im Latentwärmespeicher (100, 100', 10), wobei die Messvorrichtung ausgestaltet ist, anhand der Dichte und/oder des Volumens und/oder der Füllhöhe und/oder der Temperatur des Phasenwechselmaterials (104, 7) und/oder des Innenraumdruckes im Latentwärmespeicher (100, 100', 10) eine durch den Latentwärmespeicher (100, 100', 10) gespeicherte Wärmemenge zu bestimmen.

7. Fahrzeug (100, 100', 10) nach einem der vorstehenden Ansprüche, wobei die Heizelemente (101) oder das Heizelement (6) derart ausgestaltet sind, dass eine Heizleistung der Heizelemente (101) oder des Heizelements (6) über eine Höhe des Latentwärmespeichers nach oben hin abnimmt.

8. Fahrzeug (100, 100', 10) nach einem der vorstehenden Ansprüche, wobei die Heizelemente (101) oder das Heizelement (6) derart ausgestaltet sind, dass eine Heizleistung in einer Richtung senkrecht zur Schwerkraft nach außen hin zunimmt.

9. Fahrzeug (100, 100', 10) nach einem der vorstehenden Ansprüche, **dadurch gekennzeichnet, dass** er eine Vielzahl von separat aufladbaren Speichermodulen umfasst.

10. Fahrzeug (100, 100', 10) nach Anspruch 9, **dadurch gekennzeichnet, dass** mindestens zwei der separat aufladbaren Module jeweils unterschiedliche Phasenwechselmaterialien mit jeweils unterschiedlichen Schmelztemperaturen aufweisen.

11. Fahrzeug (100, 100', 10) nach einem der vorstehenden Ansprüche, **dadurch gekennzeichnet, dass** er mindestens ein Wärmeträgerfluidrohr (106) für ein Wärmeträgerfluid zum Entladen des Latentwärmespeichers aufweist.

12. Verwendung eines elektrisch beheizbaren Latentwärmespeichers (100, 100', 10) in dem Fahrzeug nach einem der Ansprüche 1-11 zur Beheizung von Fahrgastinnenräumen und/oder Fahrzeuginnenräumen, wobei das Fahrzeug ein elektrisch angetriebenes Fahrzeug ist.

13. Verwendung eines Latentwärmespeichers in dem Fahrzeug gemäß Anspruch 12, **dadurch gekennzeichnet dass** die Aufladung des Speichers an einer Ladestation für Elektrofahrzeuge erfolgt.

14. Verfahren zur Aufladung eines elektrisch beheizbaren Latentwärmespeichers (100, 100', 10) in dem Fahrzeug nach einem der Ansprüche 1-11 **dadurch gekennzeichnet,**
**dass** die Aufladung des Latentwärmespeichers zeitgleich mit der Ladung der Traktionsbatterie eines elektrisch angetriebenen Fahrzeugs erfolgt.

15. Verfahren nach Anspruch 14, **dadurch gekennzeichnet dass** die elektrische Aufladung des Latentwärmespeichers (100, 100', 10) an einer Ladestation für elektrisch angetriebene Fahrzeuge erfolgt, wobei für die elektrische Aufladung des Latentwärmespeicher der Ladestation zumindest partiell elektrische Leistung entnommen wird, die durch die zeitgleich ablaufende Batterieladung nicht abverlangt wird oder nicht abverlangbar ist.

## Claims

1. Vehicle with an electrically heatable latent heat accumulator (100, 100', 10) with a phase-change material (PCM) (104, 7) as storage medium to heat a passenger compartment and/or a vehicle interior, the latent heat accumulator having a fluidly sealed housing in which the PCM is arranged, **characterized in that** a plurality of electrically effective heating elements (101) are essentially uniformly distributed throughout the volume of the PCM (104, 7) and/or that at least one electrically effective heating element (6) is provided and
a plurality of thermal conductivity structures (5) are essentially distributed uniformly throughout the volume of the PCM (104, 7),
**characterised in that** a ratio of the heating output of the heating elements (101) or of the heating element to a heat accumulator capacity of the phase-change material (104) is at least 5 h-¹, wherein the effective parts of the heating elements (101) or of the heating element (6) are completely covered by the phase-change material (104, 7) independently of the aggregate state of the phase-change material (104, 7).

2. Vehicle (100, 100', 10) according to claim 1, **characterised in that** the ratio of a specific heating surface of the heating elements (101) or of the heating element (6) to a heat accumulator capacity of the latent heat accumulator is at least 2 cm2/Wh.

3. Vehicle according to one of the preceding claims, **characterised in that** at least 0.25 W/cm² is a mean heating output density of the heating elements (101) or of the heating element (6).

4. Vehicle (100, 100', 10) according to one of the preceding claims, **characterised in that** the thermal conductivity structures (5) partially protrude from the phase-change material (104, 7) at least when the phase-change material (104, 7) is in a solid aggregate state.

5. Vehicle (100, 100', 10) according to one of the preceding claims, **characterised in that** a respective longitudinal section of the thermal conductivity structures (5) is triangular, quadrangular, rectangular, square, trapezoidal and/or has a convex or concave shape tapering upwards.

6. Vehicle (100, 100', 10) according to one of the preceding claims, comprising a measuring device to determine a density and/or a volume and/or a fill level and/or a temperature of the phase-change material (104, 7) and/or an interior pressure in the latent heat accumulator (100, 100', 10), with the measuring device being configured to determine the amount of heat stored by the latent heat accumulator (100, 100', 10) on the basis of the density and/or the volume and/or the fill level and/or the temperature of the phase-change material (104, 7) and/or the interior pressure of the latent heat accumulator (100, 100', 10).

7. Vehicle (100, 100', 10) according to one of the preceding claims with the heating elements (101) or the heating element (6) being configured such that the heating output of the heating elements (101) or of the heating element (6) decreases upwards over a height of the latent heat accumulator.

8. Vehicle (100, 100', 10) according to one of the preceding claims with the heating elements (101) or the heating element (6) being configured such that the heating output increases outwards in one direction perpendicular to gravity.

9. Vehicle (100, 100', 10) according to one of the preceding claims, **characterised in that** it comprises a plurality of separately chargeable memory modules.

10. Vehicle (100, 100', 10) according to claim 9, **characterised in that** at least two of the separately chargeable modules each have different phase-change materials with different melting temperatures each.

11. Vehicle (100, 100', 10) according to one of the preceding claims, **characterised in that** it has at least one heat transfer fluid pipe (106) for a heat transfer fluid to discharge the latent heat accumulator.

12. Use of an electrically heatable latent heat accumulator (100, 100', 10) in the vehicle according to one of claims 1-11 to heat passenger compartments and/or vehicle interiors, wherein the vehicle is an electrically powered vehicle.

13. Use of a latent heat accumulator in the vehicle according to claim 12, **characterised in that** the memory is charged at a charging station for electric vehicles.

14. Method for charging an electrically heatable latent heat accumulator (100, 100', 10) in a vehicle according to one of claims 1-11, **characterised in that** the latent heat accumulator is charged at the same time as the traction battery of an electrically powered vehicle is charged.

15. Method according to claim 14, **characterised in that** the electric charging of the latent heat accumulator (100, 100', 10) occurs at a charging station for electrically powered vehicles, with at least part of the electrical output required to electrically charge the latent heat accumulator at the charging station being taken from the battery charging occuring at the same time and is not required or cannot be required.

## Revendications

1. Véhicule équipé d'un accumulateur de chaleur latente (100, 100', 10) pouvant être chauffé de manière électrique et comprenant un matériau à changement de phase (PCM) (104, 7) faisant office de moyen d'accumulation et permettant de chauffer un habitacle et/ou un intérieur de véhicule, l'accumulateur de chaleur latente présentant un boîtier étanche aux fluides au sein duquel est agencé le PCM,
une pluralité d'éléments chauffants (101) électriquement actifs étant répartis de manière essentiellement uniforme dans le volume du PCM (104, 7) et/ou au moins un élément chauffant (6) électriquement actif étant prévu et une pluralité de structures conductrices de chaleur (5) étant réparties de manière essentiellement uniforme dans le volume du PCM (104, 7),
**caractérisé en ce qu'**un rapport de la puissance de chauffage des éléments chauffants (101) ou de l'élément chauffant sur une capacité d'accumulation de chaleur du matériau à changement de phase (104) est d'au moins 5 h⁻¹, les parties efficaces des éléments chauffants (101) ou de l'élément chauffant (6) étant complètement recouvertes par le matériau à changement de phase (104, 7) indépendamment de l'état d'agrégation du matériau à changement de phase (104, 7).

2. Véhicule (100, 100', 10) selon la revendication 1, **caractérisé en ce qu'**un rapport de la surface spécifique de chauffage des éléments chauffants (101) ou de l'élément chauffant (6) sur une capacité d'accumulation de chaleur de l'accumulateur de chaleur latente est d'au moins 2 cm²/Wh.

3. Véhicule selon l'une quelconque des revendications précédentes, **caractérisé en ce qu'**une densité de puissance de chauffage moyenne des éléments chauffants (101) ou de l'élément chauffant (6) est d'au moins 0,25 W/cm².

4. Véhicule (100, 100', 10) selon l'une quelconque des revendications précédentes, **caractérisé en ce que** les structures conductrices de chaleur (5) dépassent partiellement du matériau à changement de phase (104, 7) au moins en présence d'un état d'agrégation solide du matériau à changement de phase (104, 7).

5. Véhicule (100, 100', 10) selon l'une quelconque des revendications précédentes, **caractérisé en ce qu'**une section longitudinale des structures conductrices de chaleur (5) est respectivement triangulaire, quadrangulaire, rectangulaire, carrée, trapézoïdale et/ou présente une forme convexe ou concave se rétrécissant vers le haut.

6. Véhicule (100, 100', 10) selon l'une quelconque des revendications précédentes, comprenant un dispositif de mesure permettant de déterminer une densité et/ou un volume et/ou un niveau de remplissage et/ou une température du matériau à changement de phase (104, 7) et/ou une pression intérieure dans l'accumulateur de chaleur latente (100, 100', 10), le dispositif de mesure étant conçu pour déterminer une quantité de chaleur accumulée par l'accumulateur de chaleur latente (100, 100', 10) en se basant sur la densité et/ou le volume et/ou le niveau de remplissage et/ou la température du matériau à changement de phase (104, 7) et/ou la pression intérieure dans l'accumulateur de chaleur latente (100, 100', 10).

7. Véhicule (100, 100', 10) selon l'une quelconque des revendications précédentes, les éléments chauffants (101) ou l'élément chauffant (6) étant conçus de telle manière qu'une puissance de chauffage des éléments chauffants (101) ou de l'élément chauffant (6) diminue en allant vers le haut le long d'une hauteur de l'accumulateur de chaleur latente.

8. Véhicule (100, 100', 10) selon l'une quelconque des revendications précédentes, les éléments chauffants (101) ou l'élément chauffant (6) étant conçus de telle manière qu'une puissance de chauffage augmente vers l'extérieur dans une direction perpendiculaire à la force de gravité.

9. Véhicule (100, 100', 10) selon l'une quelconque des revendications précédentes, **caractérisé en ce qu'**il comprend une pluralité de modules d'accumulation pouvant être chargés séparément.

10. Véhicule (100, 100', 10) selon la revendication 9, **caractérisé en ce qu'**au moins deux des modules pouvant être chargés séparément présentent respectivement des matériaux à changement de phase différents avec des températures de fusion différentes.

11. Véhicule (100, 100', 10) selon l'une quelconque des revendications précédentes, **caractérisé en ce qu'**il présente au moins un conduit de fluide caloporteur (106) destiné à un fluide caloporteur permettant de décharger l'accumulateur de chaleur latente.

12. Utilisation, dans le véhicule selon l'une quelconque des revendications 1 à 11, d'un accumulateur de chaleur latente (100, 100', 10) pouvant être chauffé de manière électrique afin de chauffer des habitacles et/ou des intérieurs de véhicule, le véhicule étant un véhicule à propulsion électrique.

13. Utilisation d'un accumulateur de chaleur latente dans le véhicule selon la revendication 12, **caractérisée en ce que** la charge de l'accumulateur intervient au niveau d'une station de charge pour véhicules électriques.

14. Procédé de charge, dans le véhicule selon l'une quelconque des revendications 1 à 11, d'un accumulateur de chaleur latente (100, 100', 10) pouvant être chauffé de manière électrique, **caractérisé en ce que** la charge de l'accumulateur de chaleur latente intervient simultanément par rapport à la charge de la batterie de traction d'un véhicule à propulsion électrique.

15. Procédé selon la revendication 14, **caractérisé en ce que** la charge électrique de l'accumulateur de chaleur latente (100, 100', 10) intervient au niveau d'une station de charge pour véhicules électriques, dans lequel au moins une partie de la puissance électrique qui n'est pas requise ou ne peut pas être requise par la charge de la batterie intervenant simultanément est prélevée lors de la charge électrique de l'accumulateur de chaleur latente de la station de charge.
